(19) Europäisches Patentamt / European Patent Office / Office européen des brevets

(11) **EP 1 310 903 B1**

(12) **EUROPEAN PATENT SPECIFICATION**

(45) Date of publication and mention
of the grant of the patent:
**21.07.2010 Bulletin 2010/29**

(51) Int Cl.:
***G06K 7/10*** *(2006.01)*

(21) Application number: **03003186.8**

(22) Date of filing: **11.11.1994**

(54) **Compact bar code scanning module with shock protection**

Kompakter Strichcodeabtaster mit Stossschutz

Module compact de balayage de codes à barres avec protection contre les chocs

(84) Designated Contracting States:
**DE FR GB IT**

(30) Priority: **17.11.1993 US 153053**
**20.10.1994 US 326328**

(43) Date of publication of application:
**14.05.2003 Bulletin 2003/20**

(62) Document number(s) of the earlier application(s) in
accordance with Art. 76 EPC:
**94117879.0 / 0 653 723**

(73) Proprietor: **Symbol Technologies, Inc.**
**Holtsville, NY 11742-1300 (US)**

(72) Inventors:
• **Bridgelall, Raj**
**Mt.Sinai, NY 11766 (US)**
• **Katz, Joseph**
**Stony Brook, NY 11790 (US)**
• **Dvorkis, Paul**
**Stony Brook, NY 11790 (US)**
• **Li, Yajun**
**Oakdale, NY 11769 (US)**
• **Goren, David P.**
**c/o Symbol Technologies Inc.**
**Holtsville,**
**New-York 11742-1300 (US)**

(74) Representative: **Emde, Eric et al**
**Wagner & Geyer**
**Gewürzmühlstrasse 5**
**80538 München (DE)**

(56) References cited:
**EP-A- 0 425 274    EP-A- 0 574 024**
**US-A- 5 235 167**

**Description**

This invention relates generally to hand-held scanning systems which "read" indicia, such as barcode symbols, and in particular to systems and methods for scanning one-dimensional (1-D) and two-dimensional (2-D) barcode symbols with a first scan pattern that is relatively small and dense so as to be visible to the user, and thereafter a second, larger and more robust scan pattern for decoding. The invention also relates to scanners operable in both portable (hand-held) and surface mounted (hands-free) modes for reading various types of indicia. The invention further relates to novel miniature assemblies capable of 1-D and 2-D scanning. It further relates to a scanner module for use in an optical scanner, for example, a bar code scanner.

Various optical readers and scanning systems have been developed for reading barcode symbols appearing on a label or the surface of an article. The barcode symbol itself is a coded pattern of indicia comprised of a series of bars of various widths spaced apart from one another to bound spaces of various widths, the bars and spaces having different light-reflecting characteristics. The readers and scanning systems electro-optically transform the graphic indicia into electrical signals, which are decoded into alpha-numerical characters intended to be descriptive of the article or some characteristic of it. Such characters typically are represented in digital form, and utilized as an input to a data processing system for applications in point-of-sale processing, inventory control and the like. Scanning systems of this general type have been disclosed, for example, in U.S. Patent Nos. 4,251,798; 4,360,798; 4,369,361; 4,387,297; 4,409,470 and 4,460,120.

One embodiment of such a scanning system, as disclosed in some of the above patents, resides in, inter alia, a hand-held, portable laser scanning head supported by a user. The scanning head is configured to enable the user to aim the head at a target to emit a light beam toward a symbol to be read. The light source is a laser scanner typically in the form of a gas or semiconductor laser element. Use of semiconductor devices as the light source in scanning systems is particularly desirable because of the small size, low cost and low power requirements of semiconductor lasers. The laser beam is optically modified, typically by a lens, to form a beam spot of a certain size at the target distance. Preferably, the beam spot size at the target distance is approximately the same as the minimum width between regions of different light reflectivity, i.e., the bars and spaces of the symbol.

The barcode symbols are formed from bars or elements typically rectangular in shape with a variety of possible widths. The specific arrangement of elements defines the character represented according to a set of rules and definitions specified by the code or "symbology" used. The relative size of the bars and spaces is determined by the type of coding used, as is the actual size of the bars and spaces. The number of characters per inch represented by the barcode symbol is referred to as the density of the symbol. To encode a desired sequence of characters, a collection of element arrangements are concatenated together to form the complete barcode symbol, with each character of the message being represented by its own corresponding group of elements. In some symbologies a unique "start" and "stop" character is used to indicate where the barcode begins and ends. A number of different barcode symbologies exist. These symbologies include UPC/EAN, Code 39, Code 128, Codabar, and Interleaved 2 or 5.

In order to increase the amount of data that can be represented or stored on a given amount of surface area, several new barcode symbologies have recently been developed. One of these new code standards, Code 49, introduces a "two-dimensional" concept by stacking rows of characters vertically instead of extending the bars horizontally. That is, there are several rows of bar and space pattern, instead of only one row. The structure of Code 49 is described in U.S. Patent 4,794,239.

A one-dimensional single-line scan, as ordinarily provided by hand-held readers, functions by repetitively scanning the light beam in a line or series of lines across the symbol using a scanning component such as a, mirror disposed in the light path. The scanning component may either sweep the beam spot across the symbol and trace a scan line across and past the symbol, or scan the field in view of the scanner, or do both.

Scanning systems also include a sensor or photodetector, usually of semiconductor type, which functions to detect light reflected from the symbol. The photo-detector is therefore positioned in the scanner or in an optical path in which it has a field of view which extends across and slightly past the symbol. A portion of the reflected light which is reflected off the symbol is detected and converted into an electrical signal, and electronic circuitry or software decodes the electrical signal into a digital representation of the data represented by the symbol that has been scanned. For example, the analog electrical signal from the photodetector may typically be converted into a pulse width modulated digital signal, with the widths corresponding to the physical widths of the bars and spaces. Such a signal is then decoded according to the specific symbology into a binary representation of the data encoded in the symbol, and to the alphanumeric characters so represented.

The decoding process in known scanning systems usually works in the following waxy. The decoder receives the pulse width modulated digital signal from the scanner, and an algorithm implemented in software attempts to decode the scan. If the start and stop characters and the characters between them in the scan were decoded successfully and completely, the decoding process terminates and an indicator of a successful read (such as a green light and/or an audible beep) is provided to the user. Otherwise, the decoder receives the next scan, performs another decode attempt on that scan, and so on, until a completely decoded scan is achieved or no more scans are available.

More sophisticated scanning, described in U.S. Patent 5,235,167, carries out selective scanning of 1-D and 2-D barcodes. Preliminary information, such as the barcode type and size, is preliminarily decoded during an aiming mode of operation when a relatively narrow and visible raster pattern is impinged on the target. Based upon the preliminary information, received by the scanner in the form of light reflected from the target, converted to an electrical signal and decoded, an appropriately sized raster scan pattern is generated. If the barcode pattern is found to be skewed or misaligned with respect to the direction of the raster scanning pattern, the pattern is generated with an orientation in alignment with the barcode.

Aligning the scan pattern to the barcode is awkward, especially for long range scanning. If a barcode is not horizontally positioned on, for example, a container, the user is forced to position the scanner sideways in order to scan the barcode. One possible solution, described in the aforementioned U.S. Patent 5,235,167, is to control the scanner to self-orient the scan pattern to the orientation of the barcode.

Scanning 2-D, or PDF, barcodes with a raster pattern also presents a similar problem. At certain distances, the visibility of a 2-D raster pattern is poorer than that of a single line, and orienting the barcode with the scan lines is not effortless. Assuming the pattern to be amply visible, the user may tend to position the 2-D barcode horizontally under a scan lamp. However, it would be ideal if no aligning is required. For example, a 2-D barcode may have been a photocopy vertically aligned onto a page. Upon scanning, the user may first subconsciously attempt to present the page horizontally, and thus present the barcode vertically. Without ability by the scanner to instantaneously sense barcode orientation, and then position a raster pattern to scan it, the user will be forced to realign the page vertically.

Following alignment of the scan pattern to the barcode, the pattern is then increased in width so as to fully span the length of the barcode, and if the pattern is determined to be a 2-D barcode, the height of the scan pattern is also increased so as to decode all of the barcode rows. However, the rate at which the raster pattern is increased in size is fixed and independent of the size of the barcode or the distance between the hand-held scanner and target. At a common rate of pattern size increase, depending upon the size of the barcode it may require from 0.1 to 2.0 seconds to open the scan pattern and decode the barcode. Distance to the target is another factor. Pattern size is incremented until the entire pattern is decoded. The size of each increment of increase is determined in part by the working range of the scanner. Very long range scanners, usable up to sixty feet, for example, may require smaller increments so that the patterns do not grow too fast at the end of a working range where much of the information, including start and stop codes, concerning attributes of the barcode resides. Hence, it would be desirable to control the rate at which the scan pattern grows to decode the barcode depending upon the characteristics of the barcode itself.

The scanner unit must be compact, energy efficient, and capable of scanning both 1-D and 2-D barcodes. The unit preferably will also be convertible between hand and surface support applications. The scan pattern will preferably be optimized in accordance with whether the unit is in hand held or surface supported modes of operation, whether it is in a presentation type of operation (wherein the indicia are passed under a scan lamp) or a pass through type of operation (supermarket type) and on the type of barcode or other indicia to be read.

EP-A-0 574 024 discloses an adaptive bar code scanner and forms part of the prior art pursuant to Art. 54(3) EPC. Reference will now be made to further aspects of known scanners. A typical optical scanner (for example a bar code scanner) has a light source, preferably a laser light source, and means for directing the laser beam onto a symbol (for example a bar code) to be read. On route to the symbol, the laser beam is generally directed onto, and reflected off, a light reflecting mirror of a scanning component. The scanning component causes oscillation of the mirror, so causing the laser beam repetitively to scan the symbol. Light reflected from the symbol is collected by the scanner and detected by a detector such as a photodiode. Decode circuitry and/or a microprocessor algorithm is provided to enable the reflected light to be decode, thereby recovering the data which is recorded by the bar code symbol.

Scanners of this general type have been disclosed, for example, in US Patents 4 251 798; 4 360 798; 4 369 361; 4 387 297; 4 593 186; 4 496 831; 4 409 470; 4 808 804; 4 816 661; 4 816 660; and 4 871 904.

In recent years, it has become more common for bar code scanners to have within them a distinct scanner module containing all the necessary mechanical and optical elements needed to create the scanning of the laser beam and to deal with the incoming reflected beam from the bar code that is being scanned. Using a separate scanner module, within the housing of the bar code scanner, facilitates a modular approach to design and manufacture, thereby keeping costs down, improving reliability, and facilitating the transfer of scanning technology to a variety of scanner housings. A typical prior art scanner module is disclosed in US Patent 4, 930, 848.

There is a large number of known ways of mounting a mirror within the scanning component to cause the necessary scanning motion of the laser beam. Some provide for oscillation in only a single direction, so that the scanning laser beam traces out a single path across the bar code being scanned. Others provide two dimensional scanning patterns, such as for example raster patterns or patterns of greater complexity. Examples of scanning components allowing two dimensional scanning are shown in US Patent 5 280 165, and in European Patent Application 540 781. Both of these are assigned to the same assignee as the present invention, and are hereby incorporated by reference.

As optical scanning systems have become more complex, and as the demand for smaller size and lower power consumption has increased, shock protection for the scanner modules has become more difficult. These highly efficient scan engines, with both resonant and non-resonant scanning elements are difficult to protect because the scanning element must be free to move for scanning but must be protected in the event of a shock (for example if the user drops the bar code scanner within which the scanner module is incorporated). Also, as sizes are reduced manufacturing tolerances begin to have more significant impacts on costs. Furthermore, it becomes more difficult to achieve accurate optical alignment during assembly, and to maintain that optical alignment during the life of the product.

It is a general object of the invention at least to alleviate the problems of the prior art.

A general object of this invention is to improve aim and shoot capabilities of hand-held barcode scanners. Another object of the invention is to implement robust scan patterns during decoding, and another is to enable the scanner to automatically orient the scan pattern to the rotational orientation of the symbol. A further object is to transition between aiming and decoding automatically while reading 1-D or 2-D barcodes. Other objects of this invention include providing convertibility between hand-held and surface mount applications while automatically generating scan patterns optimized for the particular application and type of indicia being read.

These and other objects and features of the invention are satisfied by a scanning system according to claim 1.

As also disclosed, a light beam scanner generates a light beam directed toward a symbol to be read and moves the beam along the symbol in an omnidirectional scanning pattern, that is, one wherein the pattern trajectory is not limited to one or a limited number of directions while a symbol is traversed. A light detector receives reflected light from the symbol and generates electrical signals responsive to the reflected light, and the scanning pattern is controlled in response to the electric signals. The scanning pattern may be radially symmetric, a rotating line pattern, or a spiral pattern. The pattern control may vary the diameter or trajectory of the light beam, and more particularly may move the light beam selectively along a first scan path or a second scan path depending on the electrical signals. In preferred embodiments, the first and second scan paths differ from each other by rotation about an axis of rotation, by an increase in scan path envelope diameter, by rotation of the first scan path about an axis of rotation and increase of scan path envelope diameter, or by displacement of the center of rotation of the first scan pattern. Preferably, the scan pattern is such that the bar code is traversed by at least two scan lines per row of bar patterns during reading.

A particular arrangement of the foregoing includes providing a relatively bright, rosette scanning pattern for enabling a user to aim and direct the beam toward a bar code symbol to be read, scanning the symbol detecting light reflected from the symbol and generating an electrical signal in response to the reflected light, and modifying the radial diameter of the scan pattern in response to the electrical signal.

Also disclosed are a light source for generating a light beam directed toward a symbol to be read, and a light detector for receiving light reflected from the symbol and, in response, generating an electrical signal. This signal is converted to data corresponding to a content of the symbol. The light beam is controlled to scan the symbol with a prescribed scan pattern to develop first data, and thereafter increase a dimension of the scan pattern at a rate dependent upon that first data.

Preferably, the scan pattern is increased in dimension at a rate, and to a magnitude, that are determined by the decoded signal, to produce ultimate data corresponding to the symbol.

The light beam is controlled to scan a symbol in an aim mode of operation and thereafter in a decode mode. The decode mode may follow the aim mode in response to a second manual operation of a trigger, or may occur automatically. In the aim mode, the light beam scans the symbol with a first, relatively small prescribed scan pattern that is visible to the user and covers only a portion of the symbol. The decode mode of operation scans a portion of the symbol with a second (same or different) prescribed scan pattern, and then incremently increases the size of this second pattern while decoding. Scan patterns found useful for aiming and decoding are spiral, stationary or rotating Lissajous, rotating line and rosette, with the spiral producing the most visible aim pattern and the rotating Lissajous producing the most robust decoding. A stationary or precessing raster pattern is produced for 2-D barcode scanning and decoding.

Although the scan patterns for aiming and decoding may be the same, they preferably are different. In this respect, the symbol is preliminarily analyzed using a rotating Lissajous pattern during the aim mode of operation to determine whether the symbol is one-dimensional or two-dimensional, and, in accordance with the present invention, the light beam is automatically controlled to describe a stationary or precessing raster scan pattern for decoding if the symbol is two-dimensional. If the scanned symbol is determined to be a one-dimensional symbol, the pattern for aiming and decoding both preferably are a rotating Lissajous. A scan control circuit automatically transitions between the aiming and decoding patterns, such as from Lissajous to raster for 2-D scanning.

Preferably, the scanner is incorporated within a housing including an approximately square window for enabling the light beam to pass through it. The housing is adapted to be hand-held, and releasably attached to a surface mount base. In a preferred arrangement, the surface mount base enables the housing to rotate about vertical and horizontal axes, and optionally includes a vertical extension to increase the height of the scanner.

Also disclosed is decoding a barcode that is angularly offset from the horizontal, without prior knowledge by the user, and despite any droop in the scan lines emitted the scanner that is characteristic of some 2-D scanning mechanisms. Advantageously, the light beam is controlled to traverse the symbol with a scan pattern having the form of a raster that precesses among successive frames so as to align with rows of barcode oriented at various angles.

A further arrangement provides system for reading coded indicia, comprising an electro-optical reader within a portable housing having a means for enabling a human operator to hold and aim the reader at indicia to be read. The reader includes a light source for generating a light beam, a light detector for receiving light reflected from the indicia and responsively generating an electrical signal, and means for converting the electrical signal to data representing information content of the indicia. A stationary fixture has a means for supporting the portable housing of the reader when not held by the operator. A scan control means controls the light beam to scan the indicia with different prescribed scan patterns in response to the information content of the indicia and whether the portable housing is separated from or mounted in the fixture.

When the reader is enabled, the scan means controls the light beam to preliminary scan the indicia with a scan pattern, such as a rotating Lissajous, that indexes angularly so as to traverse the indicia along different directions progressively as a function of time. Assume first that the housing is separated from the fixture. When the indicia content corresponds to a 1-D barcode pattern, as determined during preliminary scanning the scan pattern for decoding continues as a rotating Lissajous pattern, in accordance with the preferred embodiment. When the indicia content corresponds to a 2-D barcode pattern, the scan pattern preferably changes to a precessing raster pattern.

If the housing is mounted in the fixture, and the indicia content corresponds to a 1-D barcode pattern, as determine during preliminary scanning the scan pattern for decoding may be a single line or multiple line scan pattern. If the indicia content corresponds to a 2-D barcode pattern, the scan pattern may be a raster pattern. In either case, the scan pattern for decoding is optimized to read the classification of barcode preliminary scanned.

A particularly advantageous "aim and shoot" operation of the scanner, in accordance with the invention, is as follows. The operation comprises first directing a light beam toward a symbol to be read, executing an aim mode of operation by controlling the light beam to scan the symbol with a visible scan pattern in the form of a rotating Lissajous pattern, and then receiving light reflected from the symbol and producing first data identifying an attribute of the symbol including whether the symbol represents a one-dimensional or two-dimensional barcode symbol. The operation then provides executing a decode mode such that (a) if during aiming, the symbol is determined to be a one-dimensional barcode symbol, decoding while scanning using a rotating Lissajous scan pattern to scan the symbol, and (b) if the symbol is determined to be a two-dimensional barcode symbol; decoding while using a raster scan pattern to scan the symbol.

The scanner mechanism comprises a housing, a source within the housing for emitting a light beam to be reflected from a symbol to be scanned, and a photodetector positioned within the housing for receiving light reflected from the symbol and responsively producing an electrical signal. An optical element is positioned within the housing in a path of the light beam, and a permanent magnet mounted to a support member and produces a magnetic field. An electric coil, mounted with the optical element, is axially displaced from the support member. A plurality of semi-rigid electrically conducting wires interconnect the coil and the support member such that AC drive current applied to the coil through the wires causes the coil to generate an electromagnetic field for interaction with the magnetic field of the permanent magnet to produce oscillatory motions of the optical element.

Another scanning mechanism comprises a housing, a source within the housing for emitting a light beam to be reflected from a symbol to be scanned, a photodetector positioned within the housing for receiving light reflected from the symbol and responsively producing an electrical signal, and an optical scanning element in the housing. The optical scanning element is formed by an optical element positioned in a path of the light beam, and a cylindrical permanent magnet mounted to a support member of magnetically permeable material for producing a magnetic field, the cylindrical magnet having an open end opposing the support member. A cylindrical electric coil is mounted to the support member, surrounded by the permanent magnet and itself surrounding a core of the magnetically permeable material. A flexible membrane is mounted to and spans the open end of the cylindrical permanent magnet, and a metal plate of small mass is attached to the membrane in proximity to the electric coil and the core. An optical element is mounted for pivotal movement, and displaced from but axially aligned with the metal plate, and a coupling element of small mass interconnects the optical element and the metal plate. AC drive current applied to the coil causes the coil to generate an electromagnetic field for interaction with the magnetic field of the permanent magnet to produce oscillatory motions of the optical element with repetitive flexing of the diaphragm.

Another arrangement provides a housing, a source within the housing for emitting a light beam to be reflected from a symbol to be scanned, and a photodetector positioned within the housing for receiving light reflected from the symbol and responsively producing an electrical signal. An optical scanning element in the housing is formed by a reflector or other optical element positioned in a path of the light beam. An electric coil of cylindrical shape is mounted to a support member and produces a varying magnetic field in response to an AC current, and a permanent magnet is mounted in alignment with a central axis, and adjacent one end, of the coil. The reflector for light emitted from the light source is of a mass substantially less than the mass of the permanent magnet. An arcuate bracket of flexible material interconnects the permanent magnet and the reflector.

A further scanner mechanism provides a frame formed of flexible material and having first and second opposed ends, and a pair of parallel, slightly spaced apart wires connected to and maintained taut between the ends of the frame. Mounted to the pair of taut wires approximately centrally between the ends of the bracket, a subassembly includes an optical element for directing the light beam, and a permanent magnet coupled to the optical element and developing a magnetic field. An electromagnetic coil receives AC drive current to generate an electromagnetic field for interaction with the magnetic field of the permanent magnet and induce oscillatory motion in a first scanning direction to the optical element.

Still other objects and advantages of the present invention will become readily apparent to those skilled in this art from the following detailed description, wherein only the preferred embodiment of the invention is shown and described, simply by way of illustration of the best mode contemplated of carrying out the invention. As will be realized, the invention is capable of other and different embodiments, and its several details are capable of modifications in various obvious respects.

The invention may be carried into practice in a number of ways, and one specific embodiment will now be described, by way of example, with reference to the accompanying drawings. The novel features which are considered as characteristic of the invention are set forth in particular in the appended claims. The preferred features of the invention, however, both as to its construction and its method of operation, together with additional objects and advantages thereof, will best be understood from the following description, when read in conjunction with the drawings.

Figure 1A is a perspective view of a "palm-held" scanner; and Figure 1B is a side view of the scanner in cross-section.

Figure 2A shows raster scanning of a 1-D barcode pattern; and Figure 2B shows scanning of a 2-D, or PDF, barcode pattern.

Figure 3A shows a relatively small pattern in scanning a portion of a 1-D barcode for aiming; and Figure 3B depicts expansion of the scan pattern to decode the entire barcode.

Figure 4A shows a 2-D barcode, scanned by a relatively small, rotating Lissajous pattern for aiming; in Figure 4B, the pattern has transitioned to a raster pattern suitable for 2-D barcode decoding; and in Figure 4C, the raster is enlarged to decode the complete barcode.

Figures 5A and 5B show rosette patterns of different density for aiming; Figure 5C shows a spiral pattern and Figure 5D shows a stationary Lissajous pattern; and Figure 5E shows a rotating line pattern for aiming with automatic scan alignment.

Figure 6 shows a rotating Lissajous pattern for aiming on and decoding 1-D barcodes.

Figure 7 shows a precessing raster scan pattern for decoding 2-D barcodes of various orientations.

Figure 8 is a simplified block diagram of circuitry for producing aim and rotating line scan patterns.

Figure 9A depicts a raster pattern scanning a 2-D. barcode; in Figure 9B, the scan pattern is horizontally misoriented with respect to the barcode; and in Figure 9C, the scan pattern contains a degree of droop. Figures 9D-9F present the same scan patterns to a 1-D barcode.

Figures 10A and 10B depict DBP data streams and signal intervals for two different barcode orientations.

Figure 11 describes methodology for automatic barcode alignment.

Figure 12 is a simplified block diagram of a barcode alignment circuit.

Figure 13A is a block diagram of circuitry for driving scan elements for single line rotation and scanning; Figure 13B shows amplitude responses of a typical resonant scan element.

Figure 14 is a block diagram of circuitry for generating signals for producing a rotating Lissajous scan pattern.

Figure 15 depicts the amplitude and phase responses of resonant elements used for producing a rotating Lissajous scan pattern, in accordance with the invention.

Figure 16 is a perspective view of a rotating Lissajous scanner embodiment, implemented by four reflectors.

Figures 17A and 17B show two different reflector configurations for producing a rotating Lissajous scan pattern.

Figure 18 is a flow chart of trigger initiated, omni-directional scan pattern generation.

Figure 19 is a flow chart of automatic "aim and shoot" pattern generation.

Figures 20A and 20B are side and front views of a miniature scanning assembly.

Figures 21A and 21B are side and front views of a miniature scanner assembly.

Figures 22A and 22B are views of a miniature scanner having an optical element mounted on two taut wires.

Figure 23 is a simplified diagram showing two-dimensional scanning using an X-direction scanning element and additional Y-scanning motor.

Figure 24 is a symbolic drawing of a scanning assembly having a low-mass reflector oscillated by a permanent magnet-electromagnet mechanism.

Figure 25 is a diagram showing that the angle of oscillation of the low-mass reflector is considerably greater than that of the permanent magnet to which it is mechanically coupled.

Figures 26A and 26B are exploded views of two embodiments of palm-held scanner housings, together with a surface mount fixtures.

Figure 27 is a chart for explaining the operation of the scanner in portable and fixed modes for 1-D and 2-D barcode patterns, in accordance with the present invention.

Figure 28 is an exploded perspective view of a scanner module;

Figure 29 is a partially assembled view of the scanner module of Figure 1;

Figure 30 is a fully assembled view of the scanner module of Figure 1; and

Figure 31 is a view from below of the scanner module of Figure 1.

As used in this specification, the terms "symbol" and "barcode" are intended to be broadly construed and to cover not only patterns composed of alternating bars and spaces of various widths, but also other one or two dimensional graphic patterns, as well as alphanumeric characters.

The disclosure provides a scanner system in which the scan pattern produced by a light beam is controlled to describe an omnidirectional scanning pattern, light reflected from a symbol is detected, and the scan pattern is thereafter controlled in response to the detected signals. The disclosure also provides a scanner system and method in which adjustment of the spatial coverage of the scan pattern of a scanning beam is automatically made at a responsively controlled rate to effect an appropriate type of scanning pattern depending upon the type of symbols to be read. The disclosure further provides a scanning system operation in which two different types of barcodes may be read, a standard linear barcode and a 2-D barcode. The disclosure provides a technique for determining the type of barcode, its angular orientation, and adjusts the spatial coverage or vertical sweep of the raster scanning beam to fully scan and read a 2-D barcode.

The disclosure further produces scan patterns for reading indicia, optimized in dependence upon the operating mode of the scanner (portable or fixed) and other criteria. A portion of the barcode is initially scanned by projecting a light beam on the target containing the barcode, and scanning the beam using a pattern that is relatively small and dense so as to be visible to the user for aiming. A portion of the barcode is partially decoded to determine the type, and possible size, of the barcode, whether it is a 1-D or 2-D barcode and its angular orientation. A rotating Lissajous pattern is preferred for this purpose as it has been determined to be most robust, although other patterns can be used. If the symbol is found to be a 1-D barcode, the scan pattern is increased in size (opened) to a maximum size, at a prescribed rate, in conformance with the portion of the symbol previously decoded, and the rotating Lissajous pattern decodes the entire symbol. If the symbol is determined to be a 2-D barcode, the rotating Lissajous pattern is converted to a raster pattern, and increased in size at a prescribed rate to decode the barcode. In a preferred embodiment, the raster pattern precesses so as to align with the 2-D symbol and therefore read 2-D barcodes of different angular orientations with respect to the horizontal scanning pattern.

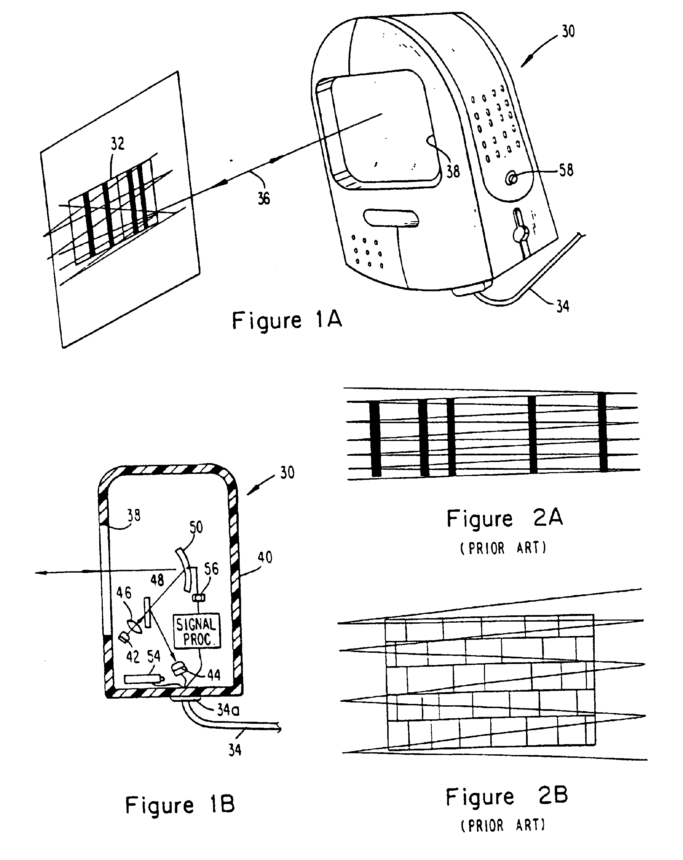

Thus, referring to Figure 1A, a hand-held barcode scanner 30 is confined to be held in the palm of a user's hand and oriented in the direction of a barcode or other symbol 32 to be read. The scanner 30 is housed in a light-weight plastic housing 40 (Figure 1B) containing a semiconductor laser light source 42, photodetector 44, optics 46, 48 and 50 and signal processing/control circuitry 52. Alternatively, the housing may be gun-shaped and provided with handle to enable the user to easily manually aim and shoot the light beam toward a symbol which may be remote from the housing, and an indicator which may be an audio source inside the housing to inform the user that the housing is positioned in the correct working range for reading bar code symbols. Such a housing is shown in Figure 1 of U.S. Patent 5,168,149, incorporated herein by reference. The circuitry in housing 40 may be powered by connection to a power source, or by batteries 54 to allow the unit to operate in a portable, wireless mode.

As further depicted in Figures 1A and 1B, a suitable lens 38, or multiple lens system, will focus the scanned beam onto the barcode symbol at an appropriate reference frame. The light source 42 is positioned to introduce a light beam into the axis of the lens 38, and the beam passes through a partially silvered mirror 48 and other lenses or beam-shaping structure as needed. An oscillating mirror 50 is connected to a scanning motor 56 that is driven by the control circuitry 52 in response to manual operation of a trigger 58 on the outside of the housing 40 (Figure 1A). Signals to and from the control and signal processing circuitry 52 are carried by exit port 34a and line 34 to external equipment.

The scanner 30 may be adapted to scan different types of articles or for different applications by interchanging the scanning head with another through use of electrical connectors. Furthermore, the scanning module may be implemented within a self-contained data acquisition system including one or more such components as keyboard, display, printer, data storage, application software and data bases (see, for example, U.S. Patent 4,409,470), and may also include a radio or other type of communications interface for communication with a local area network, telephone exchange network or radio broadcast system.

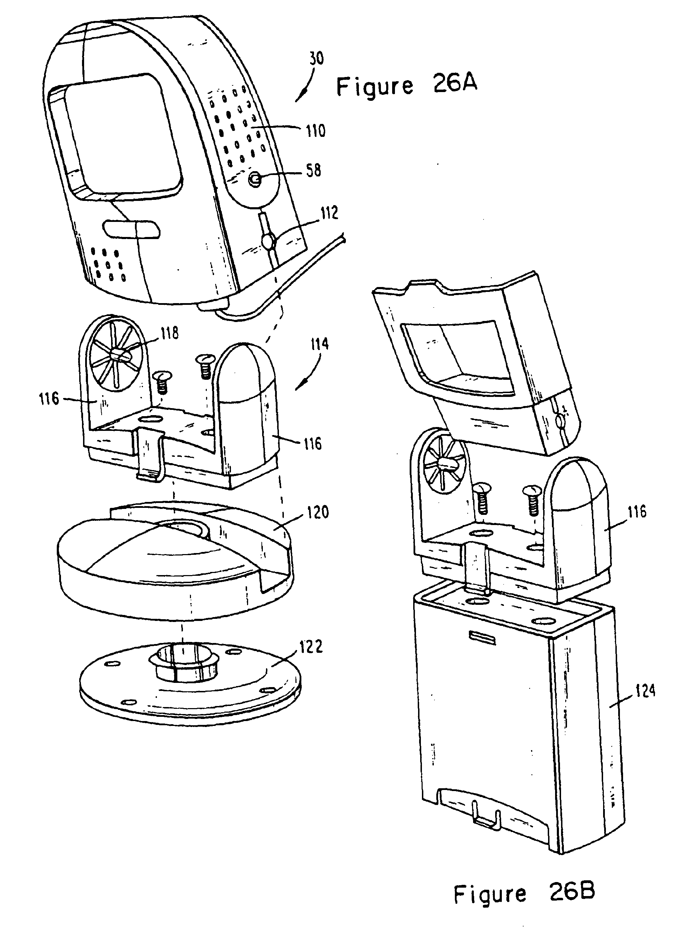

Referring to Figure 26A, the palm scanner module 30, now shown in more detail, incorporates a rubber grip 110 around the crown of the module slightly above a pair of indentations 112 for seating the module in a mounting bracket 114, enabling the module to pivot about a horizontal axis. The bracket 114 includes a pair of upstanding supports 116 having spindles 118 for rotatably supporting the module. The bracket 114 in turn is mounted on a base 120 that is turreted to a mounting plate 122 and hence is able to rotate about a vertical axis. The scanner module 30 can be easily removed from the bracket by lifting with a force sufficient to enable the spindles 118 to slip from the indentations 112.

The outgoing beam 36 is generated in the scanner 30 by a laser diode or the like, and directed to impinge upon the barcode symbol 32 that ordinarily is positioned a few inches from the front of the scanner. However, other applications may require scanning a target that is at a considerable distance, e.g., 60 feet from the scanner. The outgoing beam 36 is scanned using various patterns to be described later, one being a linear raster as shown in Figures 2A and 2B. The user positions the hand-held unit so that the scan pattern traverses the symbol to be read. Light reflected from the symbol is received by the unit 30 and detected by a photodetector 44 within the housing. Light beam 36, in both directions, passes through a transparent or translucent window 38 that preferably is approximately square in shape to accommodate 2-D as well as 1-D pattern scanning.

Referring to Figure 2A in more detail, a raster scanning pattern, known in the art, is traversing a 1-D barcode. Such a scan pattern may be generated by vertical (or Y-direction) displacement of a linear scan line driven in the X-direction, such as described in U.S. Patent 4,387,297. Although numerous scan lines traverse the barcode, only one line of scan is necessary for proper decoding since the additional scan lines are redundant and only re-read the same data on a different vertical position of the barcode symbol. In Figure 2B, the raster traverses a 2-D barcode, and is opened vertically to encompass the barcode entirely. Although the 2-D pattern contains many rows of optical elements, it is necessary only that each row be traversed once, as shown, for decoding.

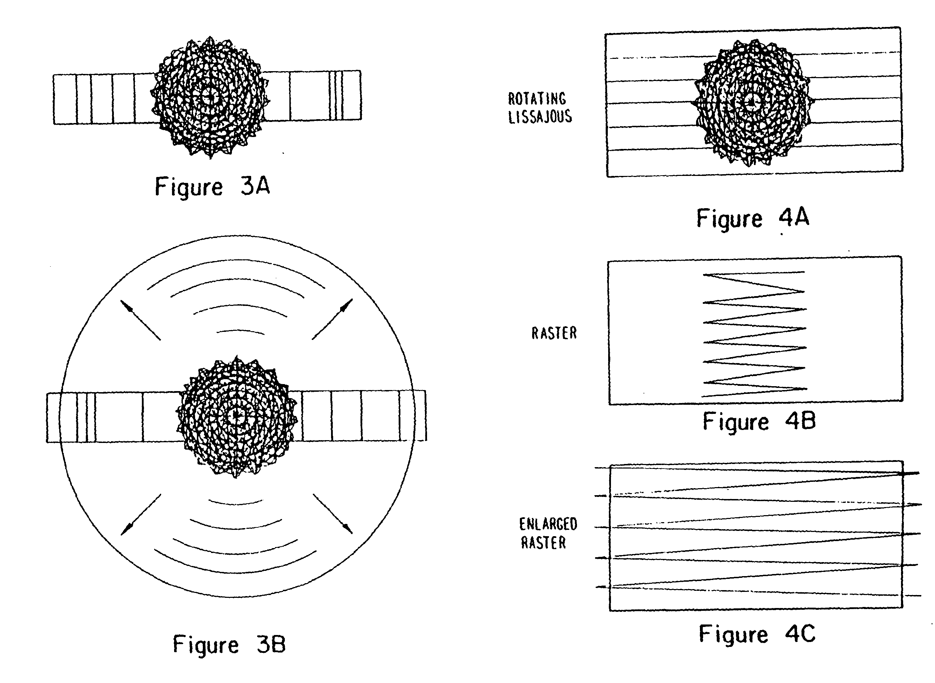

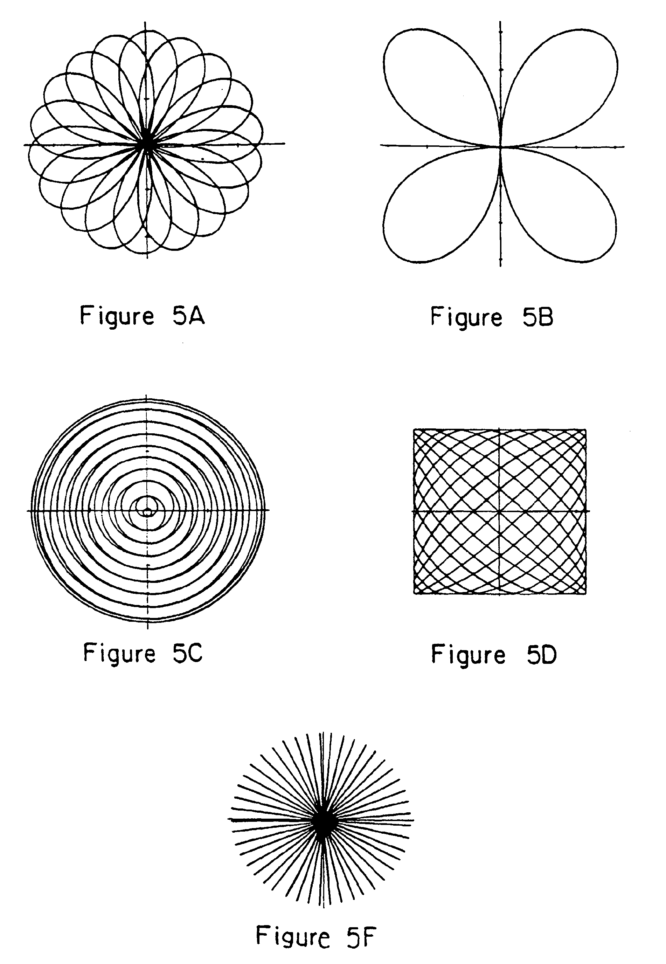

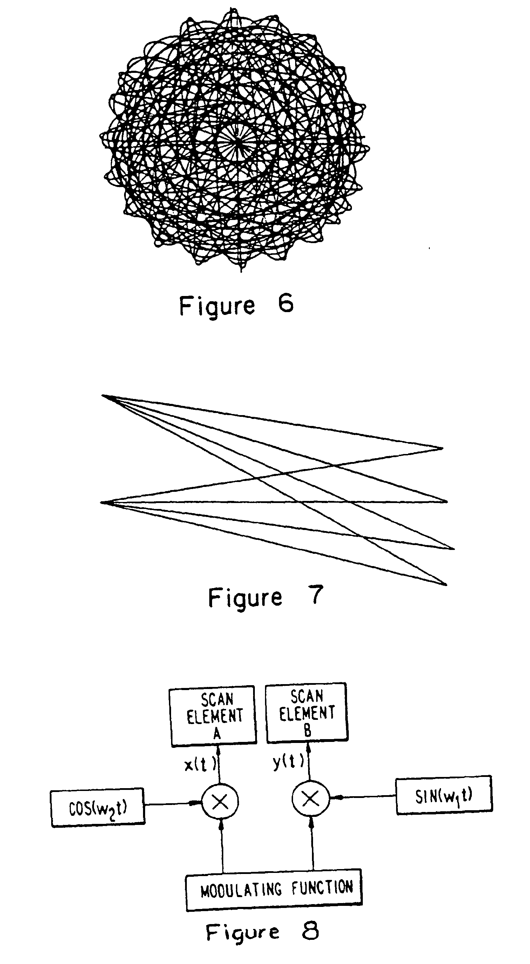

For long range scanning, first aiming and then scanning the barcode to read the code is natural. These operations are termed the "aim mode" and "decode mode" hereinafter. Two trigger pull positions are normally provided, or the trigger is pulled twice to produce these respective modes of operation. In accordance with one aspect of the invention, and referring to Figures 3A and 3B, upon a first pull of the trigger 58, a bright spot for aiming is used to establish a small visible pattern on the target surface. This technique is similar to that disclosed in U.S. Patent No. 5,117,098 of Swartz and assigned to the assignee of this invention. This visible pattern may be produced by a small scan line, but preferably is presented in the form of a bright spot. This "spot" can be developed, and is presented in most visible form, by an oscillating circle, or spiral, pattern shown in Figure 5C. Other patterns found suitable for aiming are rosette (Figures 5A and 5B), stationary Lissajous (Figure 5D), rotating line (Figure 5E) and rotating Lissajous (Figure 6).

For example, the line scan pattern of Figure 5E is produced by generating a beam of a relatively short line scan pattern, and rotating the pattern quickly about its center once or after every few scans. Alternatively, the scan line may be randomly positioned at pre-determined angles, once or after every few scans, and the angle of rotation about its center of rotation may be controlled in response to signals read produced by light reflected from the symbol. Assuming that the spot is located in nearly the center of the barcode, the orientation of the barcode may be estimated using a peak detector, to be described later, if the barcode is a 1-D barcode or the orientation may be estimated from the returned digital bar pattern, or DBP, as the scan line is positioned at different angles.

Upon the second trigger pull (or further pull of the trigger in the same stroke if the trigger is multipurpose), or automatically, in the decode mode of operation, the scan pattern opens in the exact orientation of the barcode as determined by the peak detector, as shown in Figure 3B, so that the entire barcode will be decoded. The ultimate size of the rotating scan line pattern, and the rate at which the pattern opens, is controlled dependent upon barcode attributes, such as type, aspect ratio and size, decoded during the aim mode. Optionally, the barcode may be completely decoded during the aim mode, and if so, a consistency check may be performed during the decoding mode.

The following example assumes an aim pattern in the form of a single scan line, Figure 5E, a pattern particularly useful for discerning the orientation of a barcode prior to decoding. In order to rotate a single scan line, or position it at any given angle, an element having two degrees of freedom with equal resonant frequencies on both axes is necessary. The horizontal and vertical oscillations are given by

$$\hat{X}(t) = \sin(wt)\cos(\theta)$$

$$\hat{Y}(t) = \sin(wt)\sin(\theta)$$

where θ is the angle of rotation with respect to the x-axis. This angle will normally be produced in the form of a digital quantity presented to the rotation system via a microprocessor system. The resonant frequency w should be chosen high enough so that a possible loss in aggressiveness during the angle estimation/aiming period is not apparent.

In order to cover all possible orientations of the barcode, the scan lines must be capable of rotating through 180 degrees, and preferably the entire symbol will be covered such that at least two scan lines traverse each row of bar patterns during reading. However, the resolution of rotation depends on the aspect ratio and size of the barcode.

If it is necessary to rotate the scan line once every s scans, at a resolution of r degrees, for a duration of d seconds in order to cover a total of 180 degrees, then

$$w = \frac{180\pi s}{rd}$$

is selected.

For example, if a complete 180 degree rotation should be accomplished within 0.1 second, at 10 degree resolution for every scan, then $w/2\pi$ = 90Hz will suffice.

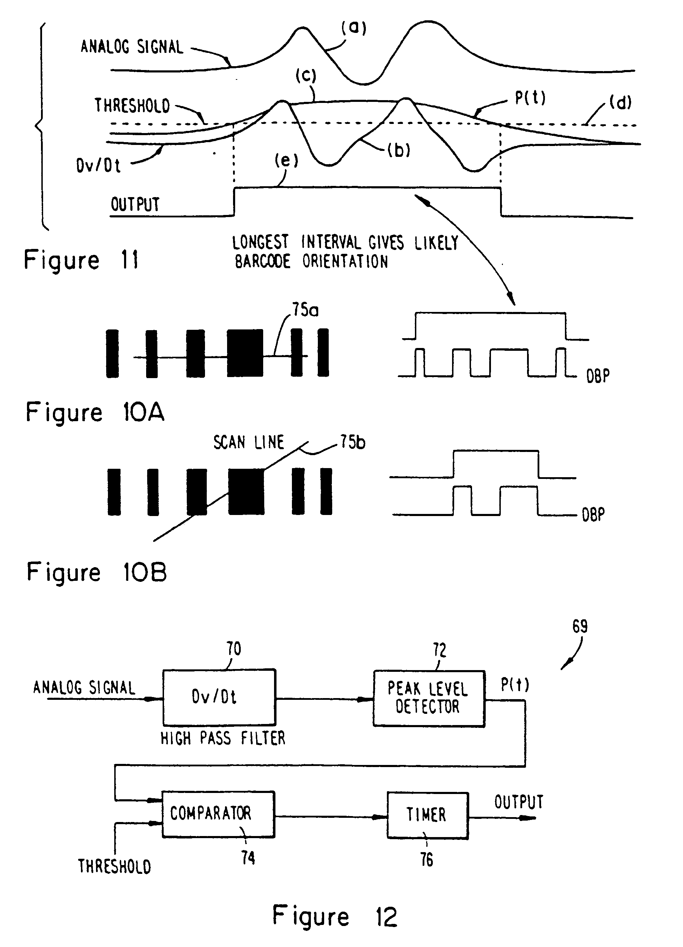

Referring to Figures 10-12, means for detecting when the scan line of Figure 5E is aligned to a barcode are shown. In Figures 10A and 10B, the barcodes and scan line are in alignment and out of alignment, respectively. The DBP (digital bar pattern) stream corresponding to the scanned barcode is analyzed to find the scan angle at which the energy content of the DBP stream is maximum because the scan line has intersected the most barcode elements. In Figure 10A, the DBP pattern scanned by line 75a has more elements than that of Figure 10B where the barcode has been scanned by a skewed scan line 75b. As the scan line is rotated, the number of elements produced in the DBP stream is estimated by filtering and comparing with the stream produced by other scan line angles. Hence, referring to Figure 11, the DBP stream is read and supplied as an analog signal (a) derived from the DBP stream to a high pass filter 70 which produces waveform (b). A peak level detector 72 tracks the peak value or envelope of the filtered replication of the DBP stream (see waveform (c)), and the peak value is compared to a prescribed threshold (e) by comparator 74. The points at which the envelope and threshold intersect each other develop an output signal (e) having a duration that corresponds to the number of DBP elements spanned by the scan line. The duration of the output signal is measured by timer 76, to indicate the number of elements of the DBP stream, and the scan line producing a DBP stream of greatest duration is identified as having the best alignment to the barcode.

The orientation of the scan line alternatively may be determined more precisely than what is capable using the circuit of Figure 12 by implementing an algorithm wherein the DBP stream is read and scanned for regions bound by a known scan direction synchronizing signal (called "SOS") having the most elements. For example, the orientations between five and ten degrees may have one hundred elements, while all others have fewer. If the scan line is shorter than the barcode, then this region between five and ten degrees, for example, will indicate the general barcode orientation. A more exact orientation can be found by rotating the scan line in a direction that minimizes the total sum of these element widths. Once the exact orientation is found, the scan line length may be increased until a decode occurs. Hence, this approach represents a global search for general barcode orientation, and then a fine tuning step.

The circuit of Figure 12 is more immune than the algorithmic approach, as the threshold of comparator 74 may be set to ignore spurious elements due to noise.

Although the short single line pattern is the most visible, it is disadvantageous for aiming because it suggests orientation and may be psychologically distracting. Larger spots, those shown in Figure 5A-D, can be simulated without changing the aperture by creating the spiral pattern shown in Figure 5A, implemented by modulating the size of a circle pattern. As mentioned previously, a spiral is the most visible, non-orientation, suggestive and easily implemented. All of the aim patterns of Figure 5A-D can be created by the circuit shown symbolically in Figure 8, which implements the following equations:

$$x(t) = \sin(w_2 t)A(t) \qquad\qquad (1)$$

$$y(t) = \cos(w_1 t)A(t) \qquad\qquad (2)$$

The function $A(t)$ can be arbitrarily picked. For example, let $A(t) = \sin(w_3 t)$. The rosette pattern of Figure 5A is created with $w_1 = w_2$, and $w_3 = 4w_2$; the rosette pattern of Figure 5B is created with $w_1 = w_2$, and $w_3 = 2w_2$; the spiral pattern of Figure 5C is created with $w_1 = w_2$. and $A(t) = |\sin(w_2/50)|$; and the stationary Lissajous pattern of Figure 5D is created with $w_1 = w_2/1.1$, and $A(t) = 1$. The rotating line pattern, Figure 5E, is created by having the modulating function $A(t) = \sin(w_{scan} t)$ and $w_1 t = w_2 t = e$ where e is the angle of the scan line, and $w/2\pi$ is the scanning frequency.

Another pattern which may be used for aiming, and which will be described in more detail later, is the rotating Lissajous pattern shown in Figure 6. The rotating Lissajous pattern is somewhat inferior for aiming because its visibility is less pronounced than other patterns, but is particularly advantageous insofar as its ability to decode during aiming is the most robust of all the patterns considered.

Another pattern for aiming found particularly effective is a bright rosette pattern of diameter less than the diameter of rosette to be used for decoding.

Once satisfied with aiming, the scanner begins to deflect the light beam with a scan pattern appropriate for decoding the barcode. The scan pattern for decode may be the same as for aim, or may be a different pattern or may be the same or different pattern with center of rotation that shifts upon transition between the two modes or during decoding. In a preferred embodiment, the decode scan pattern which is generated depends upon whether the barcode is found to be a 1-D barcode (when the preferred decode pattern is omni-directional) or a 2-D barcode (when the preferred decode pattern is raster). Pattern switching may be responsive to a second trigger pull, or may occur automatically.

For example, referring to Figure 4A, it is assumed that a rotating Lissajous aiming pattern is directed toward a target having a 2-D barcode, as shown. The barcode is partially decoded to determine barcode type and orientation. The first row of the barcode may be decoded to determine whether the barcode is a 1-D or 2-D barcode. Alternatively, an algorithm may be used that is capable of determining whether the portion read is a portion of a 1-D or 2-D barcode on the basis of code words detected and decoded.

Upon determining, in this example, that the barcode is a 2-D barcode, the scan pattern is changed to a raster pattern, as shown in Figure 4B, necessary for scanning such barcodes. Based upon data read from the barcode during the aim mode, the width of the scanning pattern is opened until it at least spans the width of the barcode, and the height is incremented until the entire barcode is decoded. As the scanning pattern is increased in height, the barcode rows encompassed by the scanning pattern will be read, decoded and interpreted to determine whether an entire 2-D barcode symbol has been scanned, as described in U.S. Patent 5,235,167. Each row the bar code will preferably be traversed by at least two scan lines, although only one traversal is necessary. Once the symbol is read, feedback to the user in the form of, for example, an audio tone, may be presented by the control/processing circuitry within the bar code reader.

Preferably, the specific pattern produced by the scanner, is a pattern that is optimized for a particular classification of indicia and depending on whether the scanner is operating in a portable mode or is mounted in its fixture. A scan pattern is deemed to be optimized if it reads and decodes a prescribed pattern in a minimum amount of time, and within reasonable economic constraints.

If the scanner is operated in the fixed mode, with the palm held module 30 is mounted in bracket 114 and the module 30 directed to a region across which items bearing indicia, such as a barcode, to be read are passed, the rotational orientation of the scan pattern with respect to barcode is indeterminate. On the other hand, if the scanner is operated in the aim and shoot mode, with the module 30 separated from the bracket, the scanning pattern may be manually aligned with the barcode. The specific pattern produced should be optimized for decoding barcodes of the particular classification of barcode being read.

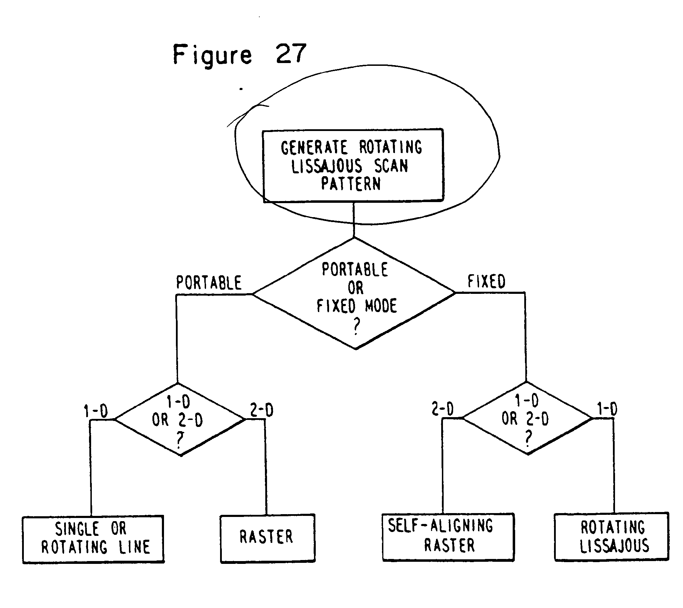

Hence, in accordance with the invention, and referring to Figure 27, a suitable scan pattern is produced for determining classification of the symbol to be read, e.g., whether the symbol is a 1-D or 2-D barcode. In the example shown, a rotating Lissajous scanning pattern is selected for its omnidirectionality and robust decoding ability. At the same time, it is determined whether the scanner is in the portable mode or fixed mode of operation (the order of sequence of the first two steps is arbitrary). This may be carried out by detecting the presence of the module 30 in bracket 114 by means of, e.g., a mechanical or magnetic proximity switch in the base of the fixture (not shown in Figures 26A, 26B), or by a manual switch located on module 30 or elsewhere.

Assume first that the scanner is in the fixed mode of operation and arranged to read a barcode symbol. The symbol is preliminarily read using the rotating Lissajous, scan pattern to detect the start and stop codes of the barcode, so as to determine whether it is a 1-D or 2-D barcode. If the symbol being scanned is determined to be a 1-D barcode, the scanning pattern will remain defaulted in the form of a rotating Lissajous pattern, as shown in Figure 27, a pattern that has been determined in accordance with the invention to be optimized for 1-D barcodes. If the symbol is determined to be a 2-D barcode, on the other hand, the scanning pattern is changed to a self-aligning raster, as also shown in Figure 27. (A self-aligning raster is a raster that rotates or precesses so as to traverse a 2-D barcode and read it independently of the rotational orientation of the barcode. A specific embodiment of self-aligning raster is a precessing raster described in more detail later with reference to Figure 7.)

Still referring to Figure 27, when the scanner is determined to be operating in the portable mode, and the symbol as read during Lissajous scanning is determined to be a 2-D barcode, the scanner produces a raster type scanning pattern. This raster is preferably stationary, but may be enhanced to precess or rotate so as to read barcode symbols of diverse rotational orientations. On the other hand, if the symbol is determined to be a 1-D barcode symbol, scanning is continued in the form of a pattern optimized to read such barcodes, such as a single or rotating scan line, or rotating Lissajous.

The particular scanning patterns produced for decoding 1-D or 2-D barcodes when the scanner is operated in portable and fixed modes can be varied for specific applications and modules of particular optical characteristics. What is important is that the scanner is adaptive, controlled manually but preferably automatically, to produce decoding scan patterns that are optimized, that is, as robust as practical with respect to the operating mode selected and the classification of indicia being read.

Preferably, the scan pattern is also optimized in dependency on whether scanning is carried out by a presentation type (under a scan lamp) or a pass through (supermarket) type reader. In the presentation type reader, an particle carrying a barcode or other symbol to be read is brought to the reader or the reader is brought to the article. Since reading is carried out in very close proximity to the barcode, there is no need for aiming. In the pass through reader, the article bearing a barcode is swiped past a scanning pattern produced by a fixed source of light beams. These two modalities present different decoding requirements to barcode readers (in the pass through mode of reading, the article swipes through the scan region relatively quickly, whereas in the presentation mode, the barcode is relatively stationary when read). Hence, if reading is carried out in the pass through mode, and the barcode is not very truncated (that is, the barcode is thin), a scanning pattern producing lines that are more sparsely spaced but more often repeated is preferred because it is more likely to traverse the barcode. That is, the faster the swipe, the thicker the barcode should be and hence a scanning pattern, such as a rotating Lissajous pattern, optimized for a relatively thick barcode pattern is preferred.

Assuming now that the rotating Lissajous pattern is generated (Figure 4A) for aiming, in aim and shoot scanning. The rate of increase of the size of the raster in moving from Figure 4B to Figure 4C is responsively controlled depending upon the size and nature of the barcode. The rate at which the scan pattern opens may be controlled to be faster for larger barcodes. The size of each increment may be dependent upon the working range of the scanner. For example, very long range scanners, e.g., up to about 60 feet, may require smaller increments so that the patterns do not grown too fast at the end of the working range.

The preferred Lissajous pattern for decoding, shown in Figure 6, is preferably of frequency ratio x/y ranging from 1.1 and 1.3 and rotated at a rate of between 1 to 4 degrees per scan. These numbers are found optimal for scanning highly truncated 1-D barcodes. In this respect, the rotating Lissajous pattern, with its sequence of scanning patterns that are successively rationally offset, has been found more robust for decoding than a stationary Lissajous pattern. The optimal stationary Lissajous pattern is at a frequency ratio 0.7. However, the optimized rotating Lissajous pattern produces a 17% improvement in decoding efficiency over the stationary Lissajous pattern. When the rotating Lissajous pattern is converted to a raster for scanning 2-D barcodes in omni-direction, the frequency ratio is made higher by increasing the slower scan frequency y.

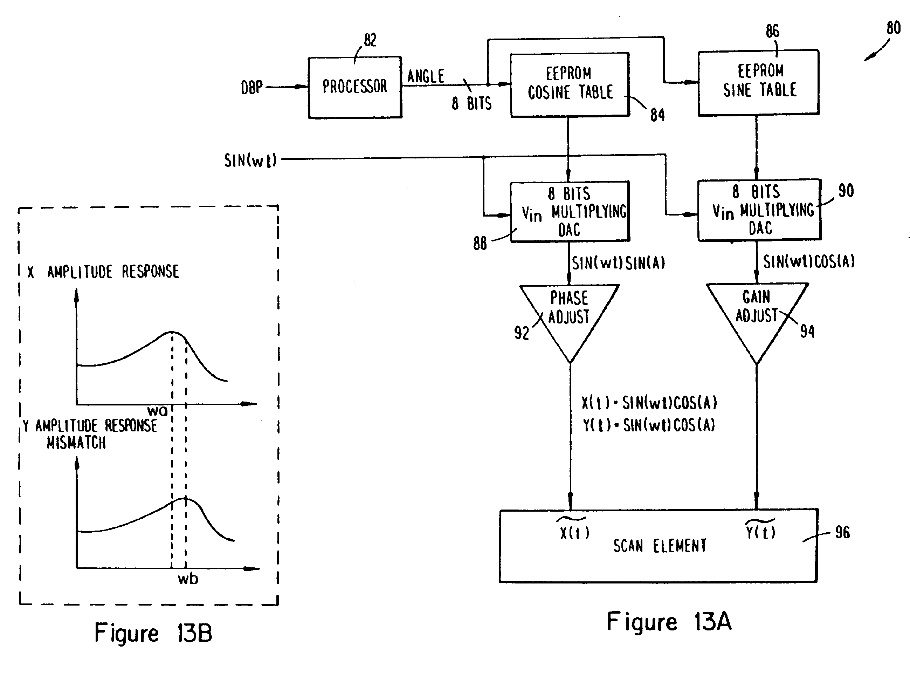

Single line rotation and scanning is produced, in accordance with the invention, by driving two mirrors (not shown) using the circuit 80 of Figure 13A which corresponds to, but is more detailed than, Figure 8. The two mirrors are mounted on resonant scan elements having relative resonant frequencies at wa and wb, respectively, shown in Figure 13B. To implement oscillation of the two mirrors for scanning in X- and Y-directions, satisfying the relationships given in equations (1) and (2), the circuit 80 implements a processor 82 that estimates the orientation of the barcode based on element counts in the DBP stream and/or start and stop character detection. A scan line will be opened upon the second trigger pull at an angle based on the last detected barcode orientation. The processor 82 addresses EEPROM cosine and sine tables 84 and 86 which generate digital data corresponding to amplitudes of the cosine and sine of the prescribed anglers. These digital signals are multiplied by sin(wt), and the product converted to a corresponding analog signal in multiplying digital-to-analog converters (DAC) 88 and 90.

Amplitude control shown herein assumes that the Y-element will be driven somewhat harder than the X-element so as to compensate for any slightly leading resonant peak, as depicted in the amplitude response curves of Figure 13B. Similar compensation may have to be carried out to equalize the phase responses. Here, it is assumed that the X-element is leading in phase. The phase adjustment is performed by phase adjustment circuits 92 and 94. The outputs of the phase adjustments 92, 94 are supplied to the X- and Y-inputs of resonant scan elements 96.

Resonant scan elements are known in the art. Such elements typically are provided with a flexural strip of Mylar or other material cantilever mounted to a base and supporting a miniature permanent magnet positioned within a coil. The coil is secured to a base, and a scan mirror is attached to the free end of the cantilever mounted flexural strip. By changing the dimensions or flexural characteristics of the cantilever mounted strip, the mass of the strip, the permanent magnet and mirror, or the distribution of mass on the flexural strip, different resonant frequencies can be established.

The resonant scan element can also be presented as a single element having different resonant frequencies in mutually orthogonal directions, and utilizing a single mirror to perform single line rotation and scanning. The circuit 80 of Figure 13A can be implemented to apply drive signals for X- and Y-scanning to the two inputs of the dual-resonance scanning element, as disclosed in the copending application.

To produce 2-D scanning patterns for symbologies such as PDF 417, the resonant scan element must be capable of being simultaneously driven by at least two frequency' components. Raster pattern rotation is achieved by driving a 2-D scanner such that the horizontal element is driven with the signal X(t) and the vertical element is driven with the signal Y(t), where

$$X\ (t) = \sin(w_1 t)\cos(\theta) - \sin(w_2 t)\sin(\theta) \qquad (3)$$

$$Y(t) = \sin(w_1 t)\sin(\theta) - \sin(w_2 t)\cos(\theta) \qquad (4)$$

and $\theta$ is the angle of rotation in digital form.

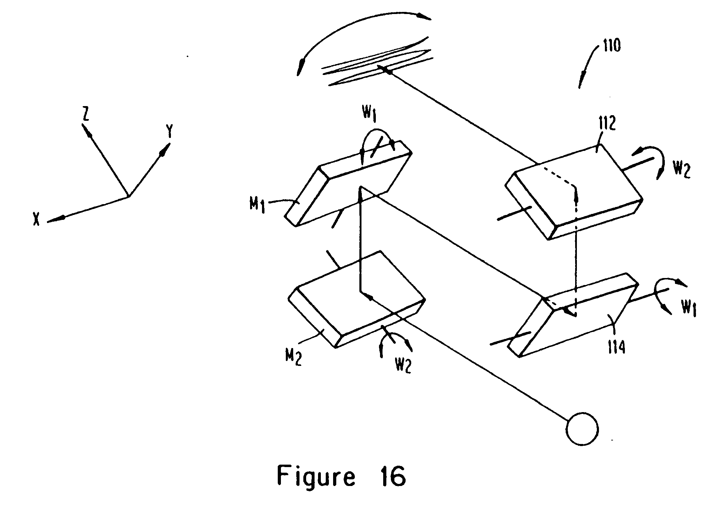

The above equations describe a rotating Lissajous pattern, and in fact, any Lissajous pattern may be rotated if the two sine functions are replaced by their Lissajous equivalent. If the resonant scan element has the desired equal amplitude and phase responsive at the two sinusoidal components of each drive axis, as illustrated in Figure 16 depicting the frequency response shapes of resonant scan elements for 2-D scanning, then no added compensation for phase and amplitude is required.

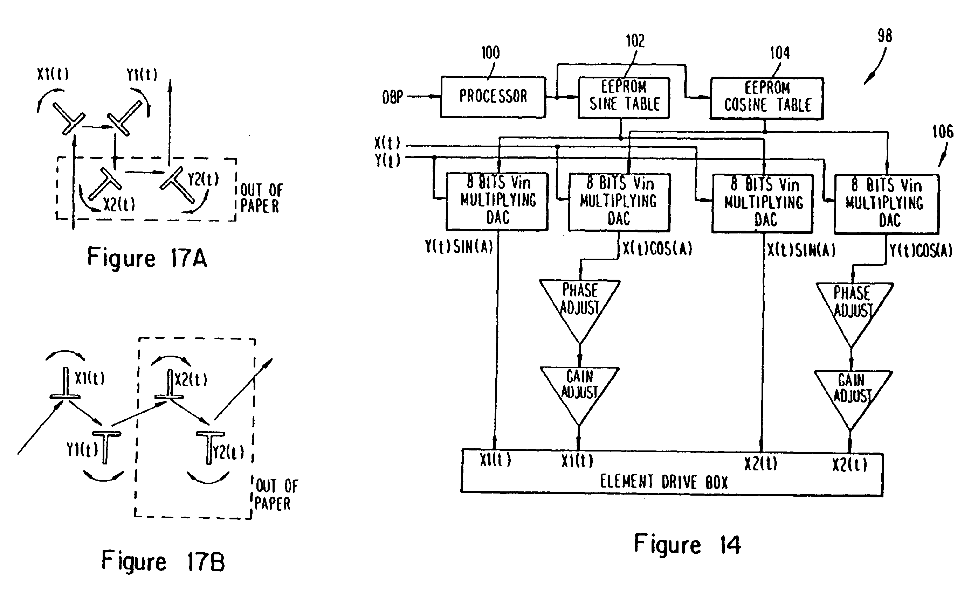

A circuit 98 for developing drive signals for Lissajous pattern rotation, shown in Figure 14 and described by equations (3) and (4), comprises a processor 100 addressing sine and cosine EEPROM tables 102 and 104 that produce the sine and cosine values of the angle, in digital form, generated by the processor. These sine and cosine digital values are supplied to multiplying DAC units 106 to produce the analog sine and cosine functions of the above equations.

The four drive signals produced by circuit 98 of Figure 14 may be applied to four resonant elements supporting four reflectors, each oscillating at a single resonant frequency, as shown in Figure 17 and identified by numeral 110.

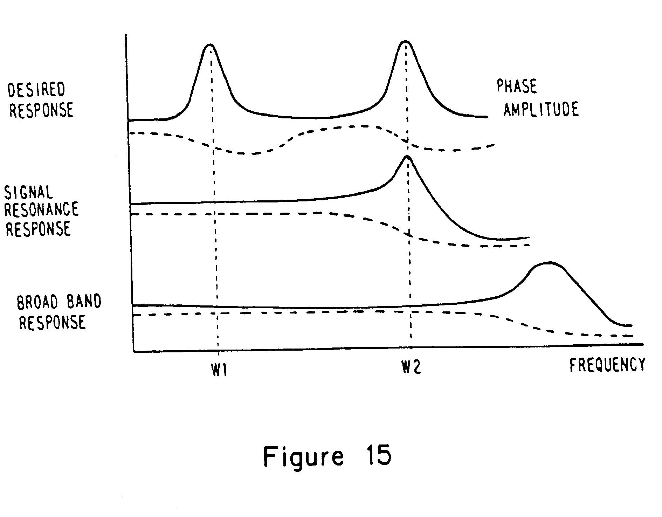

A first pair 112, 114 of the mirrors 110 is optically combined as X-axis elements having two resonant frequencies. The second pair is arranged as a Y-axis element having two resonant frequencies that match those of the first pair. The mirrors may be oriented in either of the configurations of Figures 15A and 15B.

Alternatively, each mirror pair may be combined on a single resonant element wherein a distinct resonant peak is available for each axis. The element hence can be driven at its resonance frequency by the higher frequency w2 and off resonance by the lower frequency w1, but with a larger amplitude and any necessary phase compensation. Resonance elements of dual resonant frequency response may be arranged orthogonally to produce the rotatable raster patterns in this case.

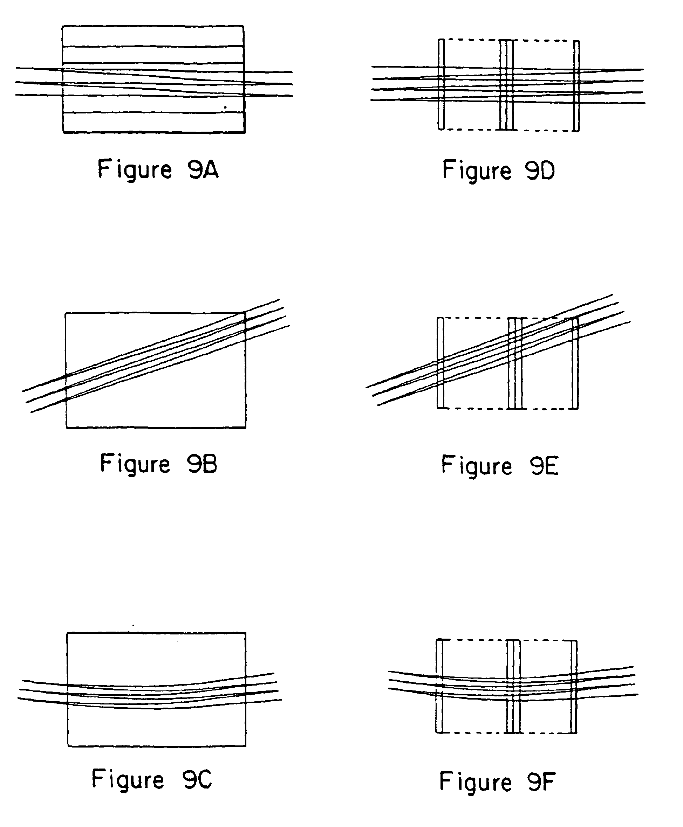

Figures 9A-9D are raster patterns scanning 2-D and 1-D barcodes, respectively, in perfect alignment. However, in practice since the orientation of the scan pattern will not be in perfect alignment with the barcode; scanning typically will be somewhat skewed as shown in Figures 9B and 9E. Furthermore, since 2-D scanning mechanisms tend to be slightly non-linear and will ordinarily produce a somewhat arcuate, or drooped, scan pattern as shown in Figures 9C and 9F, decoding of the barcode is somewhat difficult to achieve when a complete row of barcode is not entirely scanned.

To compensate for rotational misalignment between the scan pattern and barcode, or droop in the scan pattern, another aspect of the invention precesses the raster so as to traverse barcode elements that are angularly displaced or are not oriented along a straight line. Referring to Figure 7, the angle of sweep of each line by the raster scanner is staggered or precessed slightly, so that the light beam sweeps across the barcodes in a zig-zag pattern. Precession whereby subsequent scanning patterns are rotationally offset from a previous pattern, occurs when the ratio of the X component to the Y component of the scanning pattern is not an integer. In the preferred embodiment, the scan ratio is 1.75:1. For example, if the X component frequency is 120 scans per second, then the Y component frequency is 68.5 scans per second (120 divided by 1.75). The scanner can be designed such that the scan ratio is always 1.75:1, although precession alternatively can be achieved by activating the Y frequency scan by a computer driver. Preferably, each row of the bar code will be traversed by two lines of scan, although only a single scan line per row is necessary.

The resultant zig-zag pattern causes the light beam to sweep the barcode symbols in a plurality of different angles, so that angularly offset lines of barcode up to about thirty degrees of offset can be read by the raster during precession. Similarly, even if the beam emitted by the scanner contains a degree of droop, the precessing raster will scan every barcode line during successive frames.

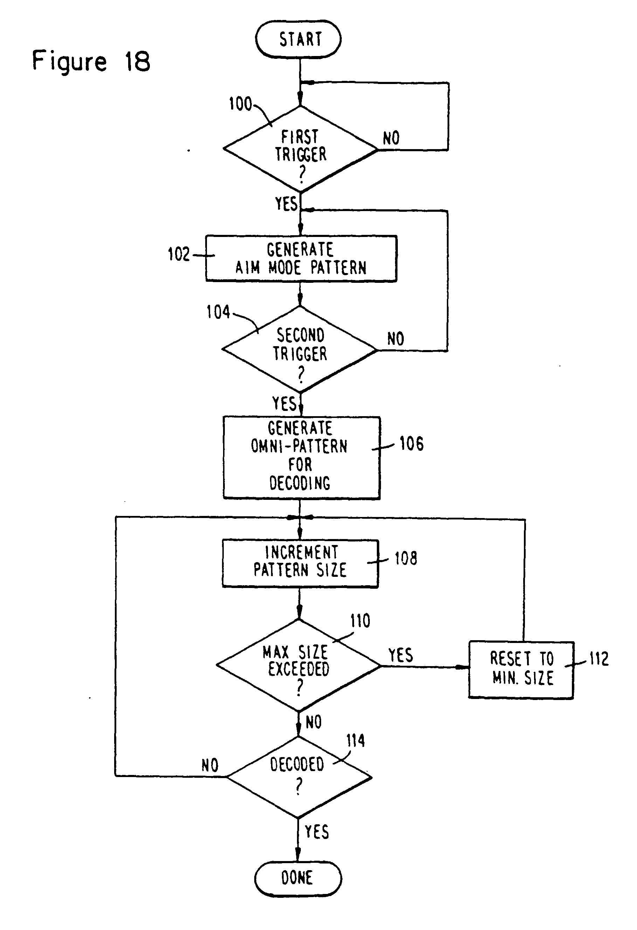

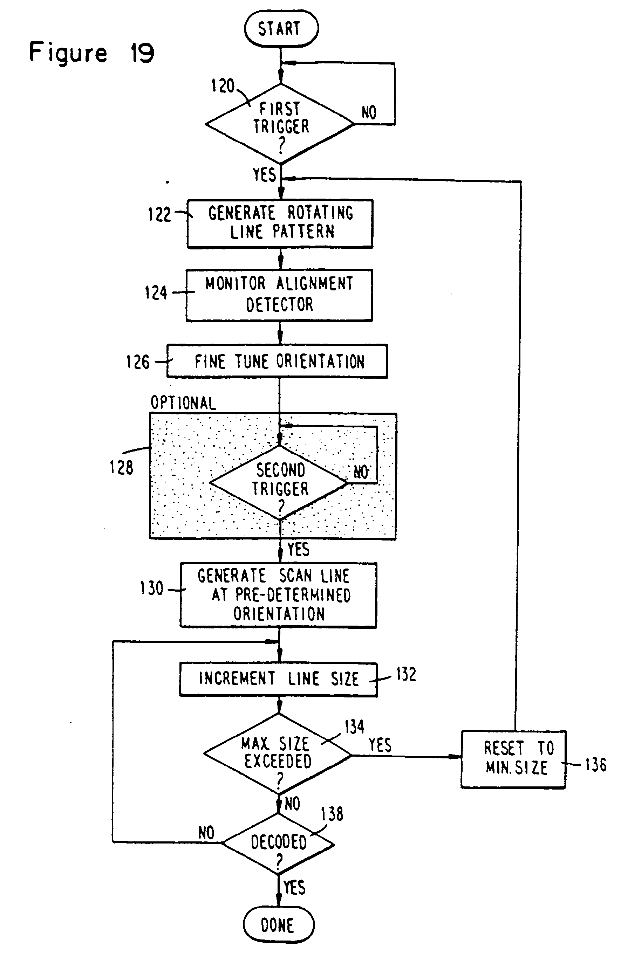

The processors 82 of Figure 13A and 100 of Figure 14 are programmed to control the scanner of this invention in the aim and decode modes, either by manual (trigger) operation or automatically as described previously. Programming of the processors will now be described with reference to the flow charts of Figures 18 and 19. Figure 18 represents scanner operation for either 1-D or 2-D barcodes, wherein the trigger must be operated once for aim and a second time for decode. In Figure 19, describing a 1-D barcode scanning example, the transition between aim and decode modes of operation is automatic. In some cases, the requirement to operate the trigger twice for aim and decode is preferable, to prevent a symbol from being decoded prematurely or decoding a neighboring barcode.

Referring to Figure 18, the scanner awaits a first operation of the manual trigger, and when the trigger has been first depressed, as detected in step 100, the scanner generates the aim mode pattern which, as aforementioned, preferably is an omnidirectional pattern (an omnidirectional pattern is one wherein the scan angle the beam traverses over time is not limited) and may be any suitable scan pattern that is radially symmetric, e.g., not a simple raster pattern, including those shown in Figures 5A-E or Figure 6; the oscillating circle or spiral pattern (Figure 5C) being best from a standpoint of visibility and the rotating Lissajous pattern being best from the standpoint of preliminary decoding of the barcode (step 102).

The scanner now waits for another trigger operation, and when the trigger has been manually operated for the second time, as determined in step 104, an omni-pattern for decoding is generated by the scanner (step 106). In the example of Figures 4A and 4B, as described previously, the aim pattern in the form of a rotating Lissajous for aiming transitions converts to a raster for decoding, and as shown in Figure 4C the aiming pattern is incremented in size (step 108) until the maximum size of the pattern is exceeded (step 110) when the scan pattern is reset in step 112 to increment again.

If, however, the barcode has been fully decoded, determined in step 114, before the maximum size of the scan pattern is exceeded, the routine is completed.

The size of each pattern increment, and the rate at which the increments are generated, are preferably controlled in response to data read from the symbol during the aim mode to achieve an optimal rate of Y-direction expansion depending on the number of rows in and height of a label. If the 2-D code is not successfully decoded at step 114, then decoding is continued until either a successful decode has occurred or until a predetermined amount of time, typically on the order of three seconds, has elapsed.

In accordance with Figure 19, transition from the aim mode to the decode mode is made automatically, and for this example, the procedure is particularized for scanning a 1-D barcode, although the procedure could be generalized to encompass 2-D barcodes as well.

In response to manual operation of the trigger, in step 120, a rotating line pattern (step 122), corresponding to what is shown in Figure 5E, is produced. Alignment of the rotating line pattern and barcode is monitored in step 124, and may optionally be fine tuned in accordance with step 126. Alignment may be performed in accordance with the procedure of Figure 11 and circuit of Figure 12.

A second manual operation of the trigger per step 128 is optional. Even if the trigger is not operated at this time, when the decoder has determined the optimum angle at which to emit a decode scan pattern, the pattern is produced (step 130). The line size is incremented (step 132) until it exceeds the length of the barcode (step 134). If the maximum size is exceeded, the size of the scan line is reduced to the minimum size for aiming (step 136) and the process repeats. During the time the length of the scan line is incremented, the barcode is being decoded, in step 138, and when decoding is completed, the routine is terminated.

In either the manual or automatic operations, the light beam directed toward the symbol to be read is transitioned between first and second scan paths in the aim and decode modes. In addition to transition between the scan paths described above, the first and second scan paths may differ from each other by rotation about an axis of rotation, by increase in scan path envelope diameter, by both rotation and envelope diameter increase and by displacement of the center of rotation of the first scan pattern.

The user can, therefore, simply aim an apparent spot on the barcode, without regard for the barcode's orientation, and then decode it upon the second trigger pull. It is also possible to provide automatic scan line opening without a second trigger pull. However, there is a danger that the scanner may unintentionally scan and decode the wrong barcode.

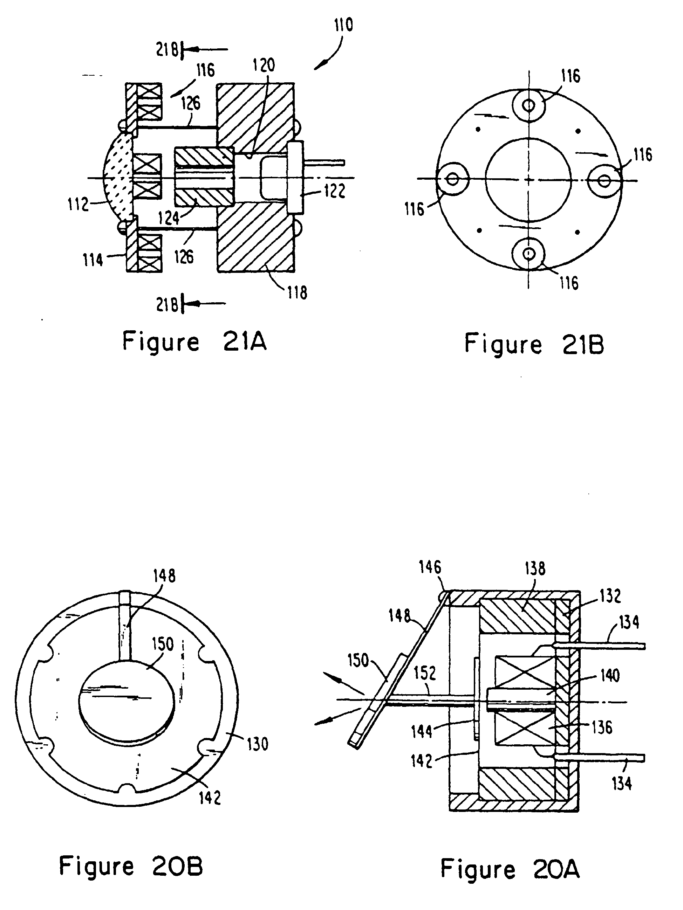

In accordance with another aspect of the invention, a first embodiment of a scanning element that may be used to produce the prescribed scan patterns is shown in Figures 21A and 21B. In Figure 21A, a scan module 110 supports and oscillates an objective lens 112 that is mounted on a circuit board 114 that also carries four electric coils 116 equally spaced along the four quadrants of the circuit board. A support member 118 has a central opening 120 for receiving and retaining a light emitting diode 122 that preferably is a laser diode. At a side of the support 118, opposite the diode 122, is a permanent magnet 124 that interacts with an electromagnetic field produced by the coils 116 when an electric current is applied.

The circuit board 114 and support 118 are interconnected by four semi-rigid wires 126 that also carry electric current from a driver circuit to the four coils. By changing the connections between the coils, 1-D or 2-D scan patterns may be selectively achieved.

Wires 126 preferably are tin-soldered to the circuit board 114 and support 118. The material of the wires preferably is a phosphor-bronze alloy, although any other material that conducts electricity and provides semi-rigid support of the circuit board 114 and lens 112 with respect to support 118 may be used.

Magnet 124 is in the form of a ring, and in one embodiment may be magnetized axially. The central hole of magnet 124 serves as an aperture stop for the laser beam.

Alternatively, the permanent magnet 124 may be multiply poled around its circumference. For example, the poling of the permanent magnet may be such that there are four poles, with South poles being oriented at 0° and 180° and North poles at 90° and 270° along the circumference. By suitably energizing two of the four coils 116, the lens and coil assembly will rotate slightly, and hence the semi-rigid wires will begin to form a helix, reducing the distance between the lens 112 and laser beam source 122 to focus the beam. The other two coils are energized to oscillate the lens assembly to produce appropriate scanning.

Another embodiment of scanner, shown in Figures 20A and 20B, comprises a casing 130, of bakelite or other suitable material, and of cylindrical configuration. Within the casing 130 is seated a soft iron disk 132 having apertures to accommodate a number of terminals 134 for supplying electric current to an electromagnetic coil 136 positioned on the disk 132. Surrounding the coil 136 within casing 130 is a ring magnet 138 for producing a magnetic field that interacts with the electromagnetic field produced by coil 136. A soft iron core 140 is positioned in the central aperture of the coil 136, and a thin diaphragm 140 of flexible material is seated on the end of magnet 138, as shown, spanning the coil 136 and its core 140. On the outer surface of the diaphragm 140, near the end of core 140 is a thin metal plate 144 of low mass.

Pivotably mounted to the end of casing 130 at 146 is a piece of film 148, preferably made of Mylar. Upon the outer surface of the membrane, at a position in longitudinal alignment with core 140, is a reflector 150. The reflector 150, together with its supporting membrane 148, is maintained separated from the diaphragm plate 144 by another piece of film 152, again preferably formed of Mylar.

Except for Mylar films 148, 152, and reflector 150, the device shown in Figures 20A and 20B is of a type conventionally used as an audio beeper, wherein an audio signal applied to leads 134 produce oscillation of the membrane 142 and its attached plate 144. In the present invention, mechanical coupling between reflector 150 and membrane 142, by virtue of Mylar film 152, causes the mirror 150 to oscillate correspondingly, and, if coil 136 is suitably energized, scan.

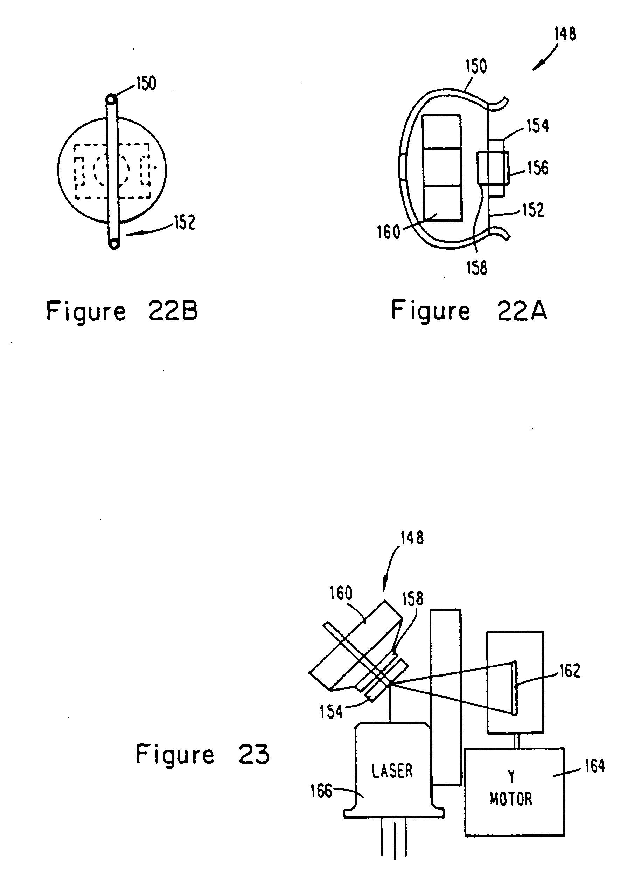

Another embodiment of a scanning mechanism, in accordance with the invention, is shown in Figures 22A and 22B as 148, wherein 1-D scanning is carried out by a scanning element in the form of a bracket, or tensioner, 150 that is of integral construction, generally C-shaped in configuration and resilient. Spanning the ends of the bracket 150 is a closely spaced, parallel pair of wires 152 maintained taut by the spread of the bracket. Attached to the taut wires 152, and essentially located thereon, are a reflector 154 and permanent magnet 158, secured to the wires by a clamp 156.

Within the bracket 150, behind the magnet 158, is an electromagnetic coil 160 which, when energized, produces an electromagnetic field that interacts with the field of the permanent magnet to oscillate reflector 154 in one direction, for example, the X-direction.

An important advantage of the structure of the scanner mechanism shown in Figures 22A and 22B is that with mirror 152 floating within the ends of bracket 150, attached to the pair of taut wires 152, strain is uniformly distributed along the wires. This represents an improvement over a scanner implementing a taut band to support an optical element, such as is described in U.S. Patent 5,168,149, where strain tends to concentrate at the ends of the band.

To produce 2-D scanning using the mechanism of Figure 22, a separate reflector 162, for deflecting the light beam in the Y-direction, is oscillated by a Y-motor 164. The configuration, shown in Figure 23, with the taut-wire X-scanner 148 of Figure 22, together with a laser beam source 166 and Y-scanner 162, 164 in the configuration shown, produces a compact scanner assembly.

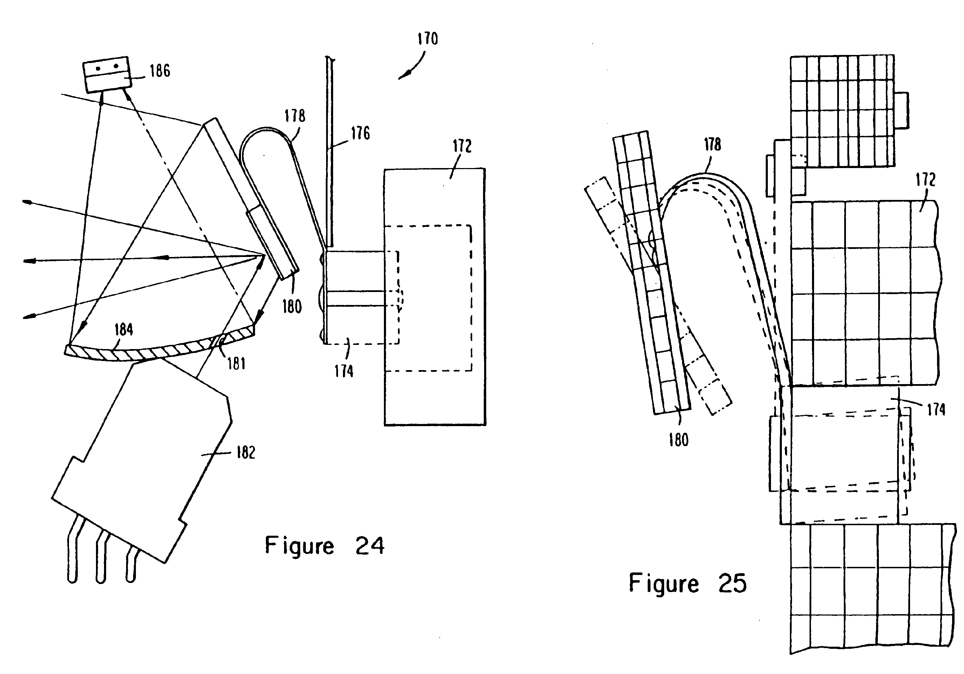

Another embodiment of scanner, shown in Figure 24, comprises an electromagnetic coil 172 having a central opening into which partially extends and electromagnetic coil 174. The coil 172 is rigidly secured to a support member (not shown), and the magnet 174 is resiliently coupled to the same support by means of an arm 176.

A U-shaped spring 178 is attached to the magnet 174 at one end, and the opposite end of the spring supports an optical element, preferably a reflector 180. Electrical leads (not shown) carry an energizing current or drive signal to the coil of electromagnet 174. The reflector 180 will oscillate in response to such electromagnet coil signal so as to scan in one or two dimensions, selectively. The spring 178 may be made of any suitable flexible materials, such as a leaf spring, a flexible metal coil or a flat bar having sufficient flexibility properties, and may be of a material such as a beryllium-copper alloy.

The reflector 180 is positioned between a laser beam source and lens assembly 182 and a target (not shown in Figure 24). Between the reflector 180 and source 182 is a collector 184 having an opening through which a light beam emitted by the laser source 182 may pass to the reflector 180. The collector is oriented so as to direct incoming light, reflected by reflector 180 and then collector 184, to a photodetector 186.

An important aspect of Figure 24 is that the mass of reflector 180 is considerably less than the mass of permanent magnet 174. The mass of the mirror is selected to be less than about one-fifth the mass of the magnet, and the angle of vibration of the mirror as shown in Figure 25, a diagram derived by computer simulation, is about seven times that of the permanent magnet.

The reflector 180 is capable of 2-D scanning. The U-shaped spring 178, which may be formed of a plastic material, such as Mylar or Kapton, the arms of the U-shaped spring 178 and the planar spring 176 may be arranged to vibrate in planes which are orthogonal to each other. Oscillatory forces applied to permanent magnet 174 by the electromagnetic 172 can initiate desired vibrations in both of the springs 178 and 176 by carefully selecting drive signals applied to various terminals of the coil, as discussed in the copending application. Because of the different frequency vibration characteristics of the two springs 178 and 176, each spring will oscillate only at its natural vibration frequency. Hence, when the electromagnetic 172 is driven by a super position signal of high and low frequency components, the U-shaped spring will vibrate at a frequency in the high range of frequencies, and the planar spring 176 will vibrate at a frequency in the low range of frequencies.

An additional important aspect of the embodiment of Figure 24 is that the laser beam emitted by source 182 impinges the reflector 180 at an angle that is orthogonal to the axis of rotation of the reflector. Hence, the system avoids droop in the 2-D scan pattern that tends to arise when the angle of incidence of the laser beam is non-orthogonal to the reflective surface.

Another important aspect of Figure 24 is in the folded or "retro" configuration shown, with the laser beam source 182 off axis from that of the beam directed from the reflector 180 to the target. The detector field of view follows the laser path to the target by way of collector 184. The folded configuration shown is made possible by opening 181 in the collector. The retro configuration enables the scanning mechanism to be considerably more compact than heretofore possible.

Optionally, the bracket 116 may be mounted on an extension tube 124, shown in Figure 26B, so as to offset the module 30 from a support surface and enable tall items to be scanned.

Hence, as described herein, the invention produces a rotating Lissajous scan pattern or other pattern that is easily seen by the user during aiming on a barcode, and then under manual control or automatically converts to a decode scan that is robust and opens at a rate, and to a size, that depends upon the barcode itself. If the barcode is a 1-D code, the decode pattern may be a precessing raster that is able to scan rows that are rotationally misaligned with the scan lines. Scanning is implemented by novel miniature 1-D and 2-D scanning assemblies, as described herein.

Another form of scanner that can produce the required two-dimensional scanning patterns is of a type implementing a scan element supported by a holder structure mounted on a mylar motor to produce oscillatory movements, the arrangement being mounted on a printed circuit board within a housing that can be manually held. The scanning motor and arrangement may be made of components formed essentially of molded plastic material, and utilizing of a mylar leaf spring to limit scan. See, for example, application serial number 07/812,923, filed December 24, 1991, assigned to the assignee of this invention and incorporated herein by reference.

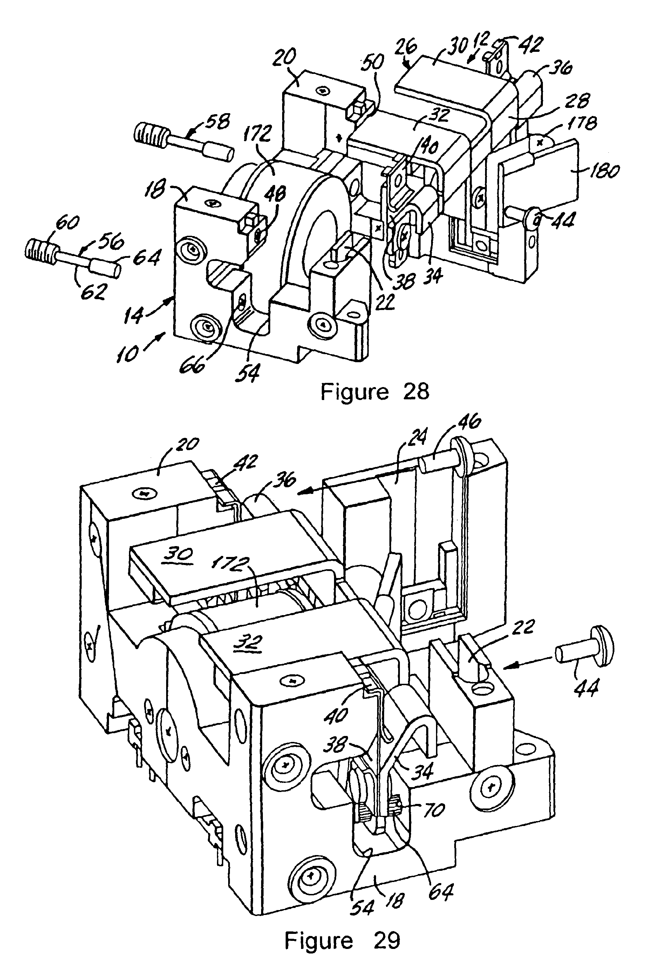

Reference should next be made to Figures 28 to 31, which illustrate the preferred scanner module within which the scanning arrangement of Figures 24 and 25 may be incorporated. For ease of reference, parts of the module already described with reference to Figures 24 and 25 will be given the same reference numerals.

As may best be seen in the exploded view of Figure 28, the preferred scanner module consists of two separate sections: a chassis element 10 and a scan element 12. In Figure 28, these two sections are shown in exploded form, prior to their securement together during the assembly process.

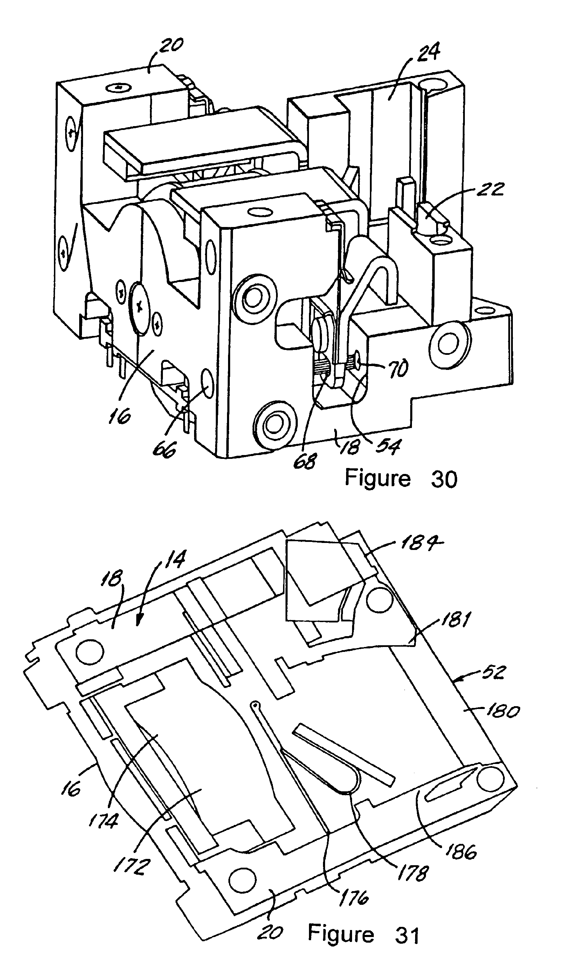

As is best seen in Figures 30 and 31, the chassis element 10 comprises a chassis 14 which carries the coil 172. The coil 172 is secured to a rear wall 16 of the chassis. At respective ends of the rear wall there are first and second forwardly-extending side supports 18, 20. The forward end of the side support 18 is provided with a vertical slot 22 (Figure 30) into which is placed (Figure 4) the collecting mirror 184 previously referred to. The forward part of the other side support 20 is provided with a larger vertical slot or cavity 24 (Figure 30) into which the photodiode assembly 186 (Figure 31) fits.

The features of the scan element 12 (which is during assembly secured to the chassis element 10) is best seen from a comparison of Figures 28, 29 and 31. The scan element comprises a beryllium-copper bracket generally shown at 26 having a vertical mounting portion 28 in a plane perpendicular to the axis of the coil 172. The upper part of the mounting portion is formed with two rearwardly-pointing prongs 30, 32 (not visible in Figure 31). Secured to the mounting portion 28 is the spring 178, previously mentioned with reference to Figure 24, which carries the mirror 180. On either side of the prongs 30, 32, the upper edge of the mounting portion 28 is bent backwardly to form first and second hanging brackets (34, 36, best seen in Figures 28 and 29). Screwed to these hanging brackets are respective first and second sheets of Mylar film 38, only one of which is visible in Figures 28 to 30. At the top of the Mylar sheets are secured respective hangers 40, 42.

The scanner module is assembled by bringing the scan element 12 up to the chassis element 10 and using screws 44, 46 to attach the hangers 40, 42 to respective bosses 48, 50 on the chassis side supports 18, 20. The relative positioning of the chassis element and the scan element, just prior to their securement together by the screws 44, 46 is shown most clearly in Figure 29.

It will be appreciated that once the scanner module has been assembled, as described, the entire weight of the scan element, including the mirror 180, is supported by the hangers 40, 42 and the sheets of Mylar film 36, 38. The entire scan element is accordingly free to rock back and forth about a horizontal axis perpendicular to the axis of the coil 172 as the Mylar film flexes.

The operation of the device will now be described, with reference to Figure 31. A laser beam, emanating from the laser beam source and lens assembly 182, passes through the hole 181 in the collector 184, and impinges upon the mirror 180 from which it is reflected via a window 52 to a bar code symbol to be read (not shown). Energisation of the coil 172 causes oscillation of the mirror 180 in two directions: a first direction due to flexing of the spring 178 and a second direction due to flexing of the Mylar film 38. By appropriate control of the coil, a variety of scanning patterns can be produced, for example a raster pattern or other types of two-dimensional pattern.

Light reflected back from the bar code symbol passes back through the window 52, impinges on the mirror 180, and is reflected to the collector 184. The collector concentrates the light and reflects it back to the photo detector 186. Decoding circuitry and/or a microprocessor (not shown) then decode the signals received by the photo detector 186, to determine the data represented by the bar code.

It might be thought that because the entire weight of the scan element 12 is taken by the Mylar film 38, the system is likely to be very vulnerable to shocks, for example if the user accidentally knocks or even drops the bar code scanner within which the module is contained. However, provision has been made for that contingency by way of an anti-shock feature which will now be described.

First, as may be seen in Figures 29 and 30, the lower end of the hanging bracket 34 is located within a channel 54 formed in the side support 18 of the chassis. As the Mylar film 38 flexes, the hanging bracket 34 moves back and forth within the channel 54. The Mylar film 34 is prevented from over-flexing by the walls of the channel 54 which act as stops. A similar arrangement (not visible in the drawings) is provided on the other side.

A second level of protection is provided by alignment pins 56, 58, best seen in Figure 28. Each pin comprises a threaded rear head portion 50, a reduced diameter smooth waist portion 62, and a smooth forward head portion 64.

In its operational position, shown in Figure 30, the waist portion 62 of the pin passes through a hole 68 in the hanging bracket 34, with the forward head portion 64 being received within a correspondingly-sized blind bore 70 within one side of the channel 54. The rear head portion 60 of the pin is screwed into and held in place by a threaded bore 66 which opens at its forward end into the channel 54 and at its rearward end into the rear surface of the rear wall 16. There is a similar arrangement on the other side (not shown) for the second alignment pin 58.

The diameter of the waist portion 62 of the pin is some 0.02 inches smaller than the diameter of the hole 68 in the hanging bracket. This provides sufficient tolerance for the Mylar to flex slightly during normal operation of the device. However, if the module is dropped the presence of the pin prevents over-stressing and perhaps breaking of the Mylar.

The alignment pins have a further function of assisting accurate positioning of the scan element 12 with respect to the chassis during assembly. During assembly, the scan element is brought up into approximately the correct position, and the alignment pins are then inserted as shown in Figure 29. At this point, the forward head portion 64 is a tight tolerance sliding fit both within the hole 68 in the hanging bracket and in the blind bore 70. This aligns the scan element to the pins and hence to the chassis. The scan element is then secured to the chassis, as previously described, using the screws 44, 46. The hangers 40, 42 provide a certain amount of adjustability or tolerance in positioning, thereby ensuring that the scan element can be attached to the chassis at the position defied by the alignment pins. The pins are then fully screwed into the threaded bores 66 until the end of the pin is flush with the rear face 16 of the chassis. At this point, as is shown in Figure 30, the forward head portion of the pin has been received within the bore 70, and the waist portion has moved up to its final position within the hole 68 of the hanging bracket.

It will be understood that each of the elements described above, or any two or more together, may also find a useful application in other types of constructions differing from those described.

While the invention has been illustrated and described as embodied in a variety of different arrangements, it is not intended to be limited to the details shown, since various modifications and structural changes may be made without departing in any way from the scope of the present invention, as set out in the accompanying claims.

## Claims

1. A scanning system including a reader operable both in portable and fixed modes for reading indicia, comprising:

   means for determining whether the reader is in a fixed or portable mode;
   means for scanning the indicia with an initial scan pattern to detect a classification of the indicia, wherein the initial scan pattern is a rotating Lissajous scan pattern; and
   means for adapting the initial scan pattern to an optimized scan pattern for reading the indicia based upon the detected classification and the determined mode.

2. The system of claim 1, wherein the reader has a light source for generating and directing a light beam at the indicia to be read, and wherein the means for scanning sweeps the light beam across the indicia for reflection therefrom, and wherein the reader has a light sensor for receiving light reflected from the indicia and, in response, for generating an electrical signal, and means for converting the electrical signal to data representing the classification of the indicia, and wherein the adapting means is responsive to the sensor for controlling the light beam to traverse the indicia with the optimized scan pattern.

3. The system of claim 2, wherein, in the fixed mode, the adapting means controls the light beam so that the optimized scan pattern is a self-aligning raster pattern when the indicia has a two-dimensional barcode classification, or a Lissajous raster pattern when the indicia has a one-dimensional barcode classification.

4. The system of claim 2, wherein, in the portable mode, the adapting means controls the light beam so that the optimized scan pattern is a single or rotating line scan pattern when the indicia has a one-dimensional barcode classification, or a raster pattern when the indicia has a two-dimensional barcode classification.

**5.** The system of claim 1, wherein the reader includes a portable housing having a means for enabling a human operator to hold and aim the reader at the indicia to be read during the portable mode, and a stationary fixture having a means for supporting the portable housing of the reader when not held by the operator to enable the light beam to be conveniently positioned with respect to the indicia to be read by the reader in the fixed mode.

**6.** The system of claim 5, wherein the determining means is operative for detecting whether the housing is mounted in the fixture.

**Patentansprüche**

**1.** Ein Scann- bzw. Abtastsystem, welches einen Leser umfasst, der sowohl in einem tragbaren als auch einem fest angebrachten Modus betriebsbereit ist, um (Kenn-) Zeichen zu lesen, und der Folgendes aufweist:

Mittel zum Bestimmen, ob sich der Leser in einem fest angebrachten oder einem tragbaren Modus befindet;
Mittel zum Scannen der (Kenn-)Zeichen mit einem ursprünglichen Scann- bzw. Abtastmuster, um eine Klassifizierung der (Kenn-)Zeichen zu bestimmen, wobei das ursprüngliche Abtastmuster ein drehendes Lissajous-Abtastmuster ist; und
Mittel zum Anpassen des ursprünglichen Abtastmusters an ein optimiertes Abtastmuster zum Lesen der (Kenn-)Zeichen basierend auf der detektierten Klassifizierung und dem bestimmten Modus.

**2.** System gemäß Anspruch 1, wobei der Leser eine Lichtquelle zum Erzeugen und Richten eines Lichtstrahls auf die zu lesenden (Kenn-)Zeichen besitzt, und wobei das Mittel zum Scannen bzw. Abtasten den Lichtstrahl über die (Kenn-) Zeichen hinweg streicht, um von diesen reflektiert zu werden, und wobei der Leser einen Lichtsensor zum Aufnehmen des von den (Kenn-)Zeichen reflektierten Lichts besitzt und um darauf ansprechend ein elektrisches Signal zu erzeugen, sowie Mittel zum Umwandeln des elektrischen Signals in Daten, die der Klassifizierung der (Kenn-)Zeichen wiedergeben, und wobei das Anpassungsmittel auf den Sensor anspricht, um den Lichtstrahl zu steuern, so dass dieser die (Kenn-)Zeichen mit dem optimierten Abtastmuster überquert.

**3.** System gemäß Anspruch 2, wobei das Anpassungsmittel in dem fest angebrachten Modus den Lichtstrahl so steuert, dass das optimierte Abtastmuster ein selbstausrichtendes Rastermuster ist, wenn die (Kenn-)Zeichen eine zweidimensionale Strichcode-Klassifizierung besitzen, oder ein Lissajous-Rastermuster, wenn die (Kenn-)Zeichen eine eindimensionale Strichcode-Klassifizierung besitzen.

**4.** System gemäß Anspruch 2, wobei das Anpassungsmittel in dem tragbaren Modus den Lichtstrahl so steuert, dass das optimierte Abtastmuster eine einzelnes oder ein rotierendes Linienabtastmuster ist, wenn die (Kenn-)Zeichen eine eindimensionale Strichcode-Klassifizierung besitzen, oder ein Rastermuster ist, wenn die (Kenn-)Zeichen eine zweidimensionale Strichcode-Klassifizierung besitzen.

**5.** System gemäß Anspruch 1, wobei der Leser ein tragbares Gehäuse mit einem Mittel aufweist, das es einem menschlichen Bediener während eines tragbaren Modus ermöglicht, den Leser zu halten und auf die zu lesenden (Kenn-)Zeichen zu richten, sowie eine stationäre Vorrichtung mit einem Mittel zum Halten des tragbaren Gehäuses des Lesers, wenn dieser nicht von dem Bediener gehalten wird, um es zu ermöglichen, dass der Lichtstrahl in herkömmlicher Weise in Bezug auf die (Kenn-)Zeichen positioniert wird, die durch den Leser in dem fest angebrachten Modus gelesen werden sollen.

**6.** System gemäß Anspruch 5, wobei das Bestimmungsmittel betriebsbereit ist, um zu detektieren, ob das Gehäuse in der Vorrichtung angebracht ist.

**Revendications**

**1.** Système de balayage comprenant un lecteur actionnable dans un mode portable et dans un mode fixe pour lire des marquages, comprenant :

des moyens de détermination si le lecteur est dans un mode fixe ou portable ;
des moyens de balayage du marquage avec un motif de balayage initial pour détecter une classification du marquage, le motif de balayage initial étant un motif de balayage de Lissajous tournant ; et

des moyens d'adaptation du motif de balayage initial vers un motif de balayage optimisé pour lire le marquage sur la base de la classification détectée et du mode déterminé.

2. Système selon la revendication 1, dans lequel le lecteur comporte une source de lumière pour générer et diriger un faisceau lumineux vers le marquage à lire, et dans lequel les moyens de balayage balayent le faisceau lumineux sur le marquage pour obtenir une réflexion par celui-ci, et dans lequel le lecteur comporte un détecteur de lumière pour recevoir de la lumière réfléchie par le marquage et, en réponse, pour générer un signal électrique, et des moyens pour convertir le signal électrique en données représentant la classification du marquage, et dans lequel les moyens d'adaptation agissent en réponse au détecteur pour commander le faisceau lumineux pour parcourir le marquage avec le motif de balayage optimisé.

3. Système selon la revendication 2, dans lequel, dans le mode fixe, les moyens d'adaptation commandent le faisceau lumineux de telle sorte que le motif de balayage optimisé est un motif de trame à alignement autonome lorsque le marquage a une classification de code à barres bidimensionnel, ou un motif de trame de Lissajous lorsque le marquage a une classification de code à barres monodimensionnel.

4. Système selon la revendication 2, dans lequel, dans le mode portable, les moyens d'adaptation commandent le faisceau lumineux de telle sorte que le motif de balayage optimisé est un motif de balayage à une seule ligne ou à ligne tournante lorsque le marquage a la classification de code à barres monodimensionnel, ou un motif de trame lorsque le marquage a une classification de code à barres bidimensionnel.

5. Système selon la revendication 1, dans lequel le lecteur comprend un boîtier portable comportant un moyen permettant à un opérateur humain de tenir le lecteur et de le diriger vers le marquage à lire pendant le mode portable, et un dispositif de fixation fixe comportant un moyen pour supporter le boîtier portable du lecteur lorsqu'il n'est pas tenu par l'opérateur pour permettre au faisceau lumineux d'être convenablement positionné par rapport au marquage à lire par le lecteur dans le mode fixe.

6. Système selon la revendication 5, dans lequel les moyens de détermination sont actionnables pour détecter si le boîtier est monté sur le dispositif de fixation.

Figure 1A

Figure 2A
(PRIOR ART)

Figure 1B

Figure 2B
(PRIOR ART)

Figure 4A
ROTATING LISSAJOUS

Figure 4B
RASTER

Figure 4C
ENLARGED RASTER

Figure 3A

Figure 3B

Figure 5A

Figure 5B

Figure 5C

Figure 5D

Figure 5F

Figure 6

Figure 7

Figure 8

Figure 9A

Figure 9D

Figure 9B

Figure 9E

Figure 9C

Figure 9F

Figure 11

Figure 10A

Figure 10B

Figure 12

Figure 13B

Figure 13A

EP 1 310 903 B1

Figure 17A

Figure 17B

Figure 14

EP 1 310 903 B1

Figure 15

Figure 16

EP 1 310 903 B1

Figure 18

```
                    ┌─────────┐
                    │  START  │
                    └─────────┘
                         │
        100              ▼
          ╲         ╱─────────╲        NO
           ╲───────│  FIRST    │──────────┐
                   │  TRIGGER  │          │
                    ╲    ?    ╱           │
                     ╲───────╱            │
                        │YES              │
                        ▼                 │
        102    ┌──────────────────┐       │
          ─────│     GENERATE     │       │
               │  AIM MODE PATTERN│       │
               └──────────────────┘       │
                        │                 │
        104             ▼                 │
          ╲        ╱─────────╲      NO    │
           ╲──────│  SECOND   │───────────┤
                  │  TRIGGER  │           │
                   ╲    ?    ╱            │
                    ╲───────╱             │
                       │YES               │
                       ▼                  │
             ┌──────────────────┐         │
             │     GENERATE     │         │
             │   OMNI-PATTERN   │──106     │
             │       FOR        │         │
             │     DECODING     │         │
             └──────────────────┘         │
                       │                  │
          ┌────────────┼──────────────────┤
          │            ▼                   │
          │   ┌──────────────────┐        │
          │   │    INCREMENT     │──108    │
          │   │  PATTERN SIZE    │        │
          │   └──────────────────┘        │
          │            │                  │
          │    110     ▼                  │
          │      ╱─────────╲   YES  ┌──────────┐
          │     │  MAX SIZE │──────▶│ RESET TO │─112
          │     │ EXCEEDED  │       │ MIN. SIZE│
          │      ╲    ?    ╱        └──────────┘
          │       ╲───────╱
          │          │NO
          │   114    ▼
          │  NO ╱─────────╲
          └────│  DECODED  │
               │     ?     │
                ╲─────────╱
                   │YES
                   ▼
              ┌─────────┐
              │  DONE   │
              └─────────┘
```

Figure 19

```
                    ┌─────────┐
                    │  START  │
                    └─────────┘
                         │
                         ▼
        120        ╱───────────╲
         ╲        ╱   FIRST     ╲    NO
          ───────╱    TRIGGER    ╲──────┐
                 ╲      ?        ╱      │
                  ╲─────────────╱       │
                         │ YES          │
                         ▼              │
        122   ┌──────────────────┐      │
          ────│ GENERATE ROTATING│      │
              │   LINE PATTERN   │      │
              └──────────────────┘      │
                         │              │
                         ▼              │
        124   ┌──────────────────┐      │
          ────│ MONITOR ALIGNMENT│      │
              │     DETECTOR     │      │
              └──────────────────┘      │
                         │              │
                         ▼              │
        126   ┌──────────────────┐      │
          ────│ FINE TUNE ORIENTATION  │
              └──────────────────┘      │
                         │              │
         OPTIONAL        ▼              │
        ┌─────────────────────────┐    │
        │         ╱─────────╲      │    │
     128│        ╱  SECOND    ╲ NO │    │
        │ ──────╱   TRIGGER    ╲───┘    │
        │       ╲      ?       ╱   │    │
        │        ╲───────────╱     │    │
        └─────────────────────────┘    │
                         │ YES          │
                         ▼              │
        130   ┌──────────────────┐      │
          ────│  GENERATE SCAN LINE    │
              │  AT PRE-DETERMINED     │
              │    ORIENTATION   │      │
              └──────────────────┘      │
                         │              │
                         ▼              │
              ┌──────────────────┐      │
              │INCREMENT LINE SIZE│─132  │
              └──────────────────┘      │
                         │              │
                         ▼         134  │
                  ╱───────────╲   YES ┌──────────┐
                 ╱  MAX SIZE   ╲──────│ RESET TO │
                ╱   EXCEEDED    ╲     │ MIN.SIZE │─136
                ╲      ?        ╱     └──────────┘
                 ╲─────────────╱
                         │ NO    138
                  ╱───────────╲
         NO      ╱   DECODED    ╲
       ─────────╱      ?        ╲
                ╲─────────────╱
                         │ YES
                         ▼
                    ┌─────────┐
                    │  DONE   │
                    └─────────┘
```

Figure 21A

Figure 21B

Figure 20B

Figure 20A

Figure 22B

Figure 22A

Figure 23

Figure 25

Figure 24

30

Figure 26A

110

58

112

118

114

116

116

120

122

Figure 26B

116

124

# Figure 27

GENERATE ROTATING
LISSAJOUS SCAN
PATTERN

PORTABLE
OR
FIXED MODE
?

PORTABLE          FIXED

1-0
OR 2-0
?

1-0          2-0

1-0
OR 2-0
?

2-0          1-0

SINGLE OR
ROTATING LINE

RASTER

SELF-ALIGNING
RASTER

ROTATING
LISSAJOUS

Figure 28

Figure 29

Figure 30

Figure 31

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4251798 A
- US 4360798 A
- US 4369361 A
- US 4387297 A
- US 4409470 A
- US 4460120 A
- US 4794239 A
- US 5235167 A
- EP 0574024 A
- US 4593186 A
- US 4496831 A
- US 4808804 A
- US 4816661 A
- US 4816660 A
- US 4871904 A
- US 4930848 A
- US 5280165 A
- EP 540781 A
- US 5168149 A
- US 5117098 A
- US 07812923 B